# EUROPEAN PATENT APPLICATION

(11) **EP 4 810 846 A1**
(43) Date of publication of application: **23.09.2026**
(21) Application number: 24891515.9
(22) Date of filing: 15.11.2024
(51) Int. Cl.: F16L 37/14, F16L 37/30, F16L 37/50

(54) **PIPING CONNECTION STRUCTURE AND CONNECTION MEMBER**

(30) Priority: 17.11.2023 JP 2023195977
(71) Applicant: Sanoh Industrial Co., Ltd., Koga-shi, Ibaraki 306-0041 (JP)
(72) Inventor: MORI, Hiroaki, Koga-shi, Ibaraki 306-0041 (JP); YAMAZAKI, Nobushi, Koga-shi, Ibaraki 306-0041 (JP); SHINBO, Takaya, Koga-shi, Ibaraki 306-0041 (JP)
(74) Representative: dompatent
(86) International application number: PCT/JP2024/040678
(87) International publication number: WO 2025/105480

(57) **Abstract**

A pipe connecting structure has: a first connecting member that includes a first tubular body, an inserted-into inlet portion that is provided at one end of the first tubular body, a first pipe connecting portion provided at another end of the first tubular body and to which a first pipe is connected, and a first valve mechanism able to open and close an internal flow path of the first tubular body; a second connecting member that includes a second tubular body, an inserted inlet portion that is provided at one end of the second tubular body and that is inserted in the inserted-into inlet portion, a second pipe connecting portion provided at another end of the second tubular body and to which a second pipe is connected, and a second valve mechanism able to open and close an internal flow path of the second tubular body; and a sealing member that is annular and that seals a space between the inserted inlet portion and the inserted-into inlet portion due to, in an inserted state in which the inserted inlet portion is inserted in the inserted-into inlet portion, an inner peripheral portion of the sealing member contacting the inserted inlet portion and an outer peripheral portion of the sealing member contacting an outer periphery of the inserted-into inlet portion.

## Description

### Technical Field

The technique of the present disclosure relates to a pipe connecting structure and a connecting member.

### Background Art

There is known a pipe connecting structure that connects together connecting members to which pipes are connected (see Patent No. 4158074).

The connecting member disclosed in Patent No. 4158074 has a main body portion in whose interior a ball valve is placed, and a pipe connecting portion to which a pipe is connected. The main body portion and the pipe connecting portion of this connecting member are structured so as to be relatively rotatable around the axes thereof. Further, an annular sealing surface is provided at the distal end of the main body portion. Due to this sealing surface contacting the sealing surface of another connecting member, the space between the connecting members is sealed.

### SUMMARY OF INVENTION

### Technical Problem

However, in the technique disclosed in Patent No. 4158074, the pipe connecting portion can be rotated relative to the main body portion in the state in which the connecting members are connected to one another. Therefore, even if force in a twisting direction is applied to a pipe, there is the possibility that, due to the pipe connecting portion being rotated relative to the main body portion, the force in the twisting direction will be cancelled. However, in order to make the pipe connecting portion rotate relative to the main body portion, the structure of the connecting member becomes complex.

Further, in the technique disclosed in Patent No. 4158074, the space between the connecting members is sealed due to the respective sealing surfaces of the connecting members being made to contact one another. However, because the sealing is carried out by the force of pushing the connecting members against one another in the axial direction, it is difficult for uniform contact pressure in the peripheral direction to be applied to the respective sealing surfaces.

A topic of the present disclosure is the provision of a technique that improves the sealing performance of a connecting member while making the structure thereof simple.

### Solution to Problem

A pipe connecting structure of one aspect of the present disclosure comprises: a first connecting member that includes a first tubular body, an inserted-into inlet portion that is provided at one end of the first tubular body, a first pipe connecting portion provided at another end of the first tubular body and to which a first pipe is connected, and a first valve mechanism able to open and close an internal flow path of the first tubular body; a second connecting member that includes a second tubular body, an inserted inlet portion that is provided at one end of the second tubular body and that is inserted in the inserted-into inlet portion, a second pipe connecting portion provided at another end of the second tubular body and to which a second pipe is connected, and a second valve mechanism able to open and close an internal flow path of the second tubular body; a sealing member that is annular, that is disposed between the inserted inlet portion and the inserted-into inlet portion, and that seals a space between the inserted inlet portion and the inserted-into inlet portion due to an inner peripheral portion of the sealing member contacting an outer peripheral surface of the inserted inlet portion and an outer peripheral portion of the sealing member contacting an inner peripheral surface of the inserted-into inlet portion; and a locking mechanism that maintains an inserted state, in which the inserted inlet portion is inserted in the inserted-into inlet portion, and that allows relative rotation of the first connecting member and the second connecting member around axes thereof.

A connecting member of another aspect of the present disclosure comprises: a tubular body; an inserted inlet portion that is provided at one end of the tubular body and that is inserted into an inserted-into inlet portion of an object of connection; a sealing member that is annular and is fit on an outer periphery of the inserted inlet portion, and that seals a space between the inserted inlet portion and the inserted-into inlet portion due to, in an inserted state in which the inserted inlet portion is inserted into the inserted-into inlet portion, an inner peripheral portion of the sealing member contacting an outer peripheral surface of the inserted inlet portion and an outer peripheral portion of the sealing member contacting an inner peripheral surface of the inserted-into inlet portion; a pipe connecting portion provided at another end of the tubular body and to which a pipe is connected; and a valve mechanism able to open and close an internal flow path of the tubular body.

### Advantageous Effects of Invention

As described above, in accordance with the present disclosure, the sealing performance of a connecting member can be improved while the structure thereof is made to be simple.

### BRIEF DESCRIPTION OF DRAWINGS

Fig. 1 is a perspective view illustrating a state before a first connecting member and a second connecting member, which structure a pipe connecting structure relating to an embodiment of the present disclosure, are connected.
Fig. 2 is a vertical sectional view illustrating a connected state of the first connecting member and the second connecting member illustrated in Fig. 1.
Fig. 3 is a lateral sectional view (a cross-sectional view in the direction of arrow line 3Y-3Y of Fig. 2) illustrating the connected state of the first connecting member and the second connecting member illustrated in Fig. 2.
Fig. 4 is a side view illustrating the connected state of the first connecting member and the second connecting member illustrated in Fig. 1.
Fig. 5 is a perspective view for explaining the operation of connecting the first connecting member and the second connecting member.
Fig. 6 is a cross-sectional view in the direction of arrow line 6Y-6Y of Fig. 5.
Fig. 7 is a perspective view illustrating the connected state of the first connecting member and the second connecting member.
Fig. 8 is a cross-sectional view in the direction of arrow line 8Y-8Y of Fig. 7.
Fig. 9 is a perspective view illustrating the connected state of the first connecting member and the second connecting member.
Fig. 10 is a side view illustrating the connected state of the first connecting member and the second connecting member.
Fig. 11 is a cross-sectional view in the direction of arrow line 11Y-11Y of Fig. 7.
Fig. 12 is a cross-sectional view in the direction of arrow line 12Y-12Y of Fig. 9.
Fig. 13 is an enlarged perspective view of main portions, illustrating a state before an inserted inlet portion of the second connecting member is inserted into an inserted-into inlet portion of the first connecting member.
Fig. 14 is an enlarged perspective view of main portions, illustrating the connected state of the first connecting member and the second connecting member.
Fig. 15 is an enlarged vertical sectional view of main portions of the first connecting member that structures a pipe connecting structure relating to another embodiment.
Fig. 16 is an enlarged perspective view of a first valve mechanism of the first connecting member of Fig. 15.
Fig. 17 is a plan view illustrating a state in which the inserted inlet portion of the second connecting member is inserted into the inserted-into inlet portion of the first connecting member.
Fig. 18 is a plan view illustrating a state in which a locking member of the second connecting member illustrated in Fig. 17 is pushed in all the way to a second position, and an operation portion of the first connecting member and an operation portion of the second connecting member have been rotated around respective valve shafts.
Fig. 19 is an enlarged side view of main portions of a first connecting member and a second connecting member that structure a pipe connecting structure relating to another embodiment.
Fig. 20 is a side view illustrating the connected state of the first connecting member and the second connecting member illustrated in Fig. 19.
Fig. 21 is an enlarged plan view of main portions of the first connecting member and the second connecting member that structure a pipe connecting structure relating to another embodiment.
Fig. 22 is an enlarged lateral sectional view (a cross-sectional view in the direction of arrow line 22Y-22Y of Fig. 19) of main portions of the first connecting member and the second connecting member that structure the pipe connecting structure illustrated in Fig. 19.
Fig. 23 is a perspective view of a locking member of a modified example that is used in the pipe connecting structure relating to the other embodiment.
Fig. 24 is an enlarged plan view of main portions of the first connecting member and the second connecting member when the locking member of the modified example illustrated in Fig. 23 is applied to the pipe connecting structure relating to the other embodiment.

### DESCRIPTION OF EMBODIMENTS

Forms for embodying the present disclosure are described hereinafter on the basis of the drawings. Structural elements illustrated by using the same reference numerals in the respective drawings mean structural elements that are the same or similar. Note that there are cases in which redundant description and reference numerals are omitted in the embodiments described hereinafter. Further, the drawings used in the following explanation are all schematic, and the relationships between the dimensions of the respective elements, the proportions of the respective elements and the like that are illustrated in the drawings do not necessarily coincide with the actual ones. Further, the relationships between the dimensions of the respective elements, the proportions of the respective elements and the like do not necessarily coincide among the respective, plural drawings.

### [Pipe Connecting Structure S1]

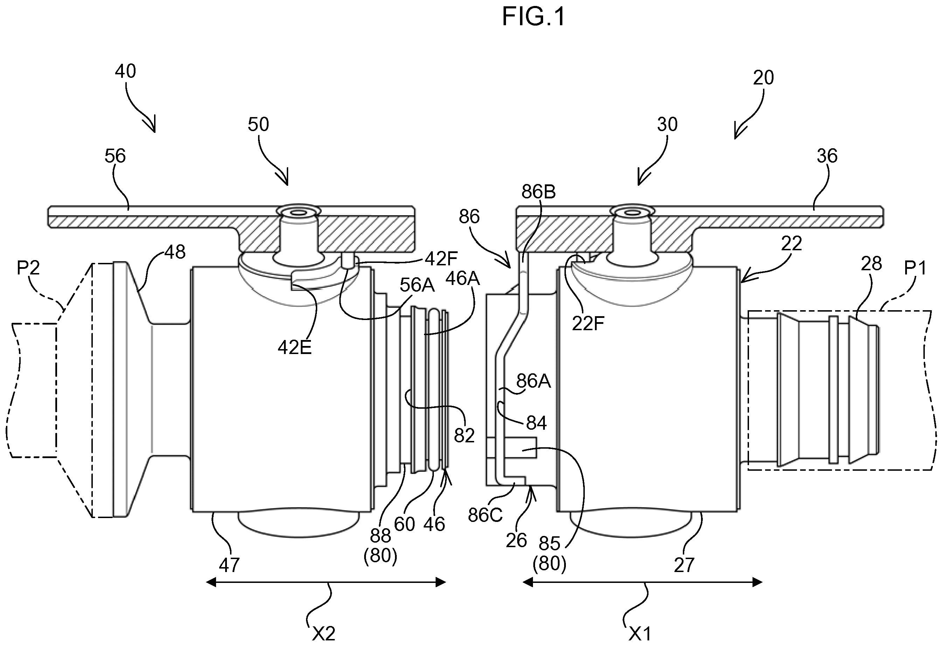

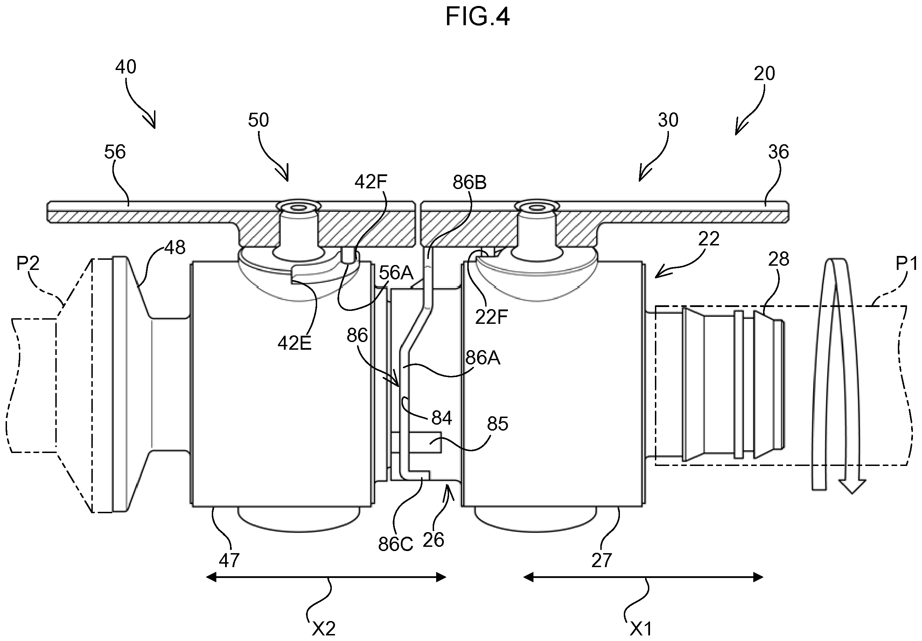

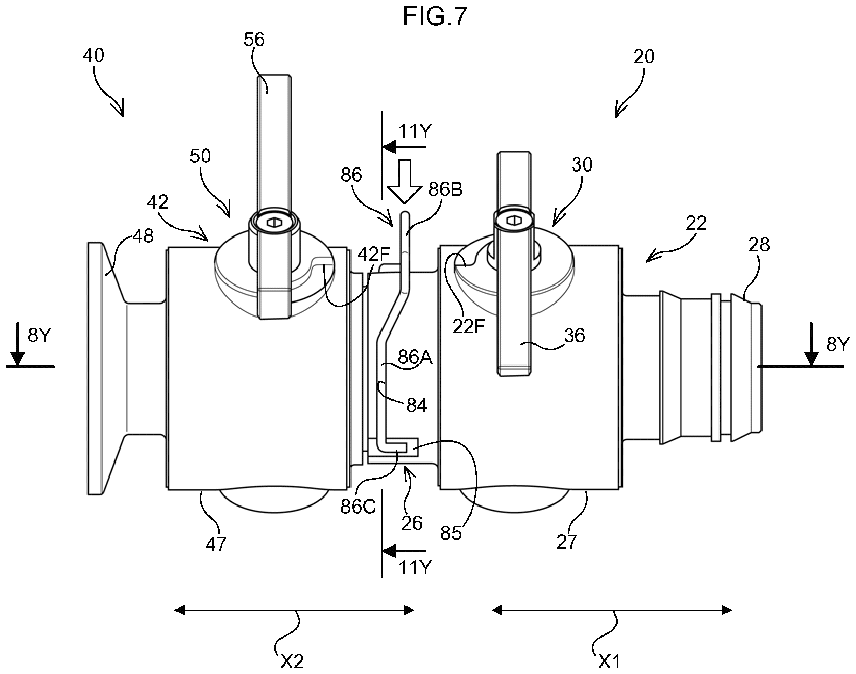

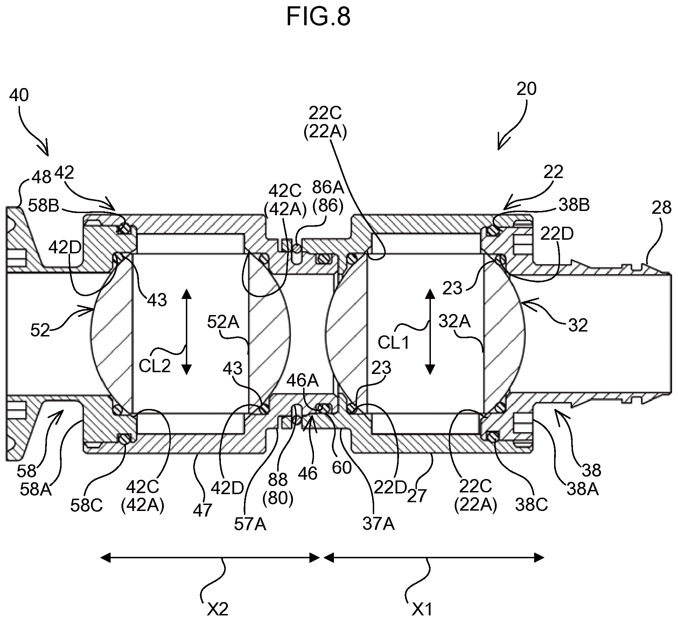

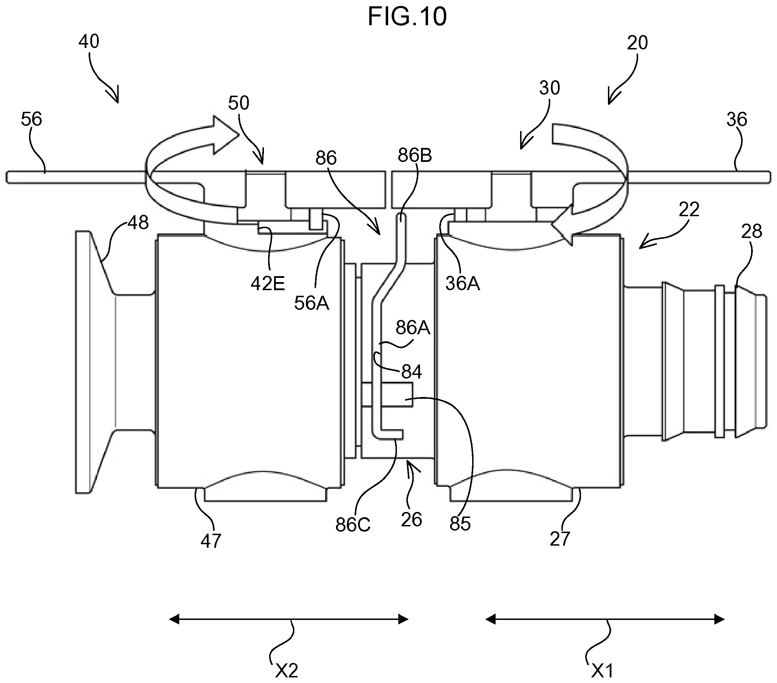

Pipe connecting structure S1 (hereinafter appropriately abbreviated as "connecting structure S1") relating to an embodiment of the present disclosure is illustrated in Fig. 1 through Fig. 14.

The connecting structure S1 of the present embodiment is a structure for connecting a first pipe P1 and a second pipe P2. Specifically, the connecting structure S1 is a structure that connects the first pipe P1 and the second pipe P2 in a state in which the first pipe P1 and the second pipe P2 can rotate relatively around the axes thereof. A heating medium for example flows through the first pipe P1 and the second pipe P2.

The connecting structure S1 has a first connecting member 20, a second connecting member 40, a sealing member 60 and a locking mechanism 80.

As illustrated in Fig. 1 through Fig. 3, the first pipe P1 (illustrated by the two-dot chain line in the figures) is connected to the first connecting member 20. Further, the second pipe P2 (illustrated by the two-dot chain line in the figures) is connected to the second connecting member 40. By connecting the first connecting member 20 and the second connecting member 40, the first pipe P1 and the second pipe P2 are connected via the first connecting member 20 and the second connecting member 40. The sealing member 60 has the function of sealing the space between the first connecting member 20 and the second connecting member 40 that have been connected together. Because the sealing member 60 of the present embodiment is fit on the second connecting member 40, the sealing member 60 is described as one of the members that structures the second connecting member 40. The locking mechanism 80 has the functions of maintaining the connected state of the first connecting member 20 and the second connecting member 40, and that allows relative rotation of the first connecting member 20 and the second connecting member 40 around the axes thereof. Details of the first connecting member 20 and the second connecting member 40 are described hereinafter.

### [First Connecting Member 20]

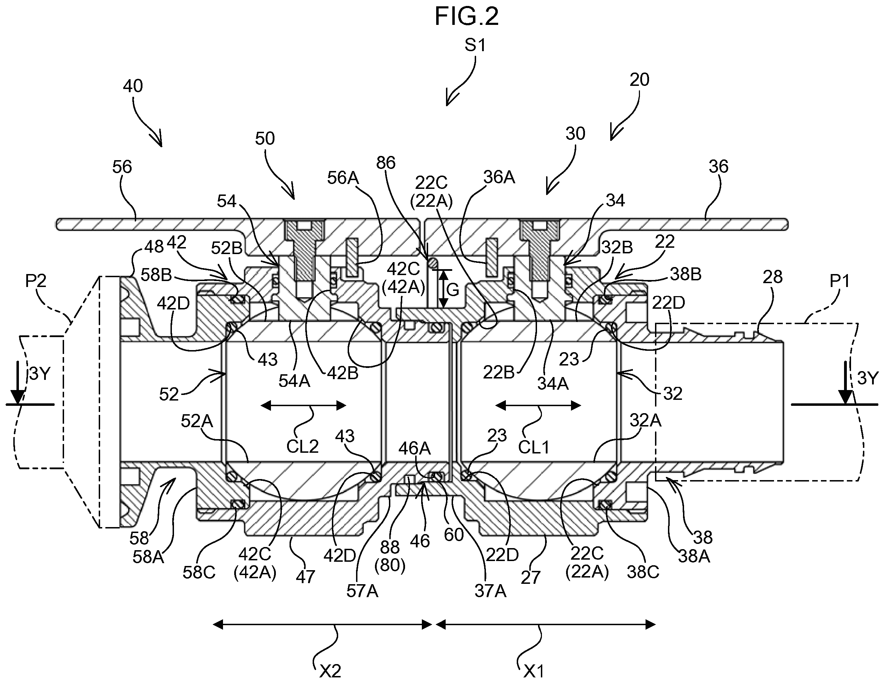

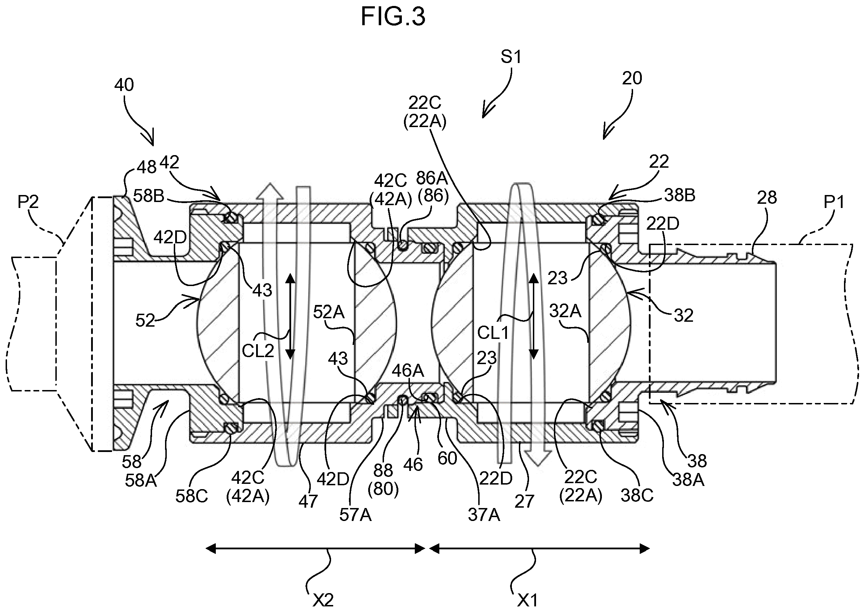

As illustrated in Fig. 2 and Fig. 3, the first connecting member 20 has a first tubular body 22, an inserted-into inlet portion 26, a first pipe connecting portion 28 and a first valve mechanism 30.

### (First Tubular Body 22)

As illustrated in Fig. 2 and Fig. 3, the first tubular body 22 structures the main body portion of the first connecting member 20. The inserted-into inlet portion 26 is provided at an axial direction one end of the first tubular body 22. Further, the first pipe connecting portion 28, to which the first pipe P1 is connected, is provided at the axial direction another end of the first tubular body 22.

Note that, hereinafter, the axial direction of the first tubular body 22 is indicated by arrow X1.

As illustrated in Fig. 2 and Fig. 3, a first valve body 32 (details described later) that structures the first valve mechanism 30 is disposed at the interior (hereinafter also called internal flow path) of the first tubular body 22. Specifically, a first accommodating portion 22A in which the first valve body 32 is accommodated is provided at the interior of the first tubular body 22. The first valve body 32 is accommodated in a rotatable state in this first accommodating portion 22A. Note that an enlarged diameter portion 27 is provided between the inserted-into inlet portion 26 and the first pipe connecting portion 28 in the axial direction of the first tubular body 22, and the interior of this enlarged diameter portion 27 structures the first accommodating portion 22A.

Further, a through-hole 22B through which a first valve rod 34 (details described later), which is for rotating the first valve body 32 and opening and closing the internal flow path of the first tubular body 22, passes is formed in the enlarged diameter portion 27 of the first tubular body 22.

Sealing grooves 22D are respectively formed in a wall surface 22C that structures the first accommodating portion 22A, at the both sides with the through-hole 22B disposed therebetween in the axial direction X1 of the first tubular body 22. Each of the sealing grooves 22D is continuous in the peripheral direction of the first tubular body 22. An annular sealing member 23 is accommodated in each of the sealing grooves 22D. These sealing members 23 contact the surface of the first valve body 32, respectively. As an example, an O-ring whose cross-sectional shape is circular is used as the sealing member 23 of the present embodiment, but the present disclosure is not limited to this structure. For example, a sealing member whose cross-sectional shape is polygonal may be used. A ball seat is an example of a sealing member whose cross-sectional shape is quadrangular.

Note that, as illustrated in Fig. 2 and Fig. 3, the first tubular body 22 of the present embodiment is structured by a tube member 37 that is at the inserted-into inlet portion 26 side and a tube member 38 that is at the first pipe connecting portion 28 side. The first tubular body 22 is formed by assembling the tube member 38 to the tube member 37. Further, the tube member 37 includes the inserted-into inlet portion 26 and a portion of the enlarged diameter portion 27. The tube member 38 includes the first pipe connecting portion 28 and the remaining portion of the enlarged diameter portion 27. Specifically, the tube member 37 includes the peripheral wall of the enlarged diameter portion 27, and a side wall portion 37A that connects this peripheral wall and the proximal end of the inserted-into inlet portion 26. Further, the tube member 38 includes a flange portion 38A that projects out from the proximal end of the first pipe connecting portion 28. This flange portion 38A is fit into an opening portion, which is at the side opposite the inserted-into inlet portion 26, of the enlarged diameter portion 27. A groove 38B that is continuous in the peripheral direction is provided at the peripheral edge portion of the flange portion 38A. An O-ring 38C is accommodated in this groove 38B. The O-ring 38C is disposed between the bottom surface of the groove 38B at the flange portion 38A and the inner peripheral surface of the enlarged diameter portion 27, and seals the space between the flange portion 38A and the enlarged diameter portion 27.

### (Inserted-Into Inlet Portion 26)

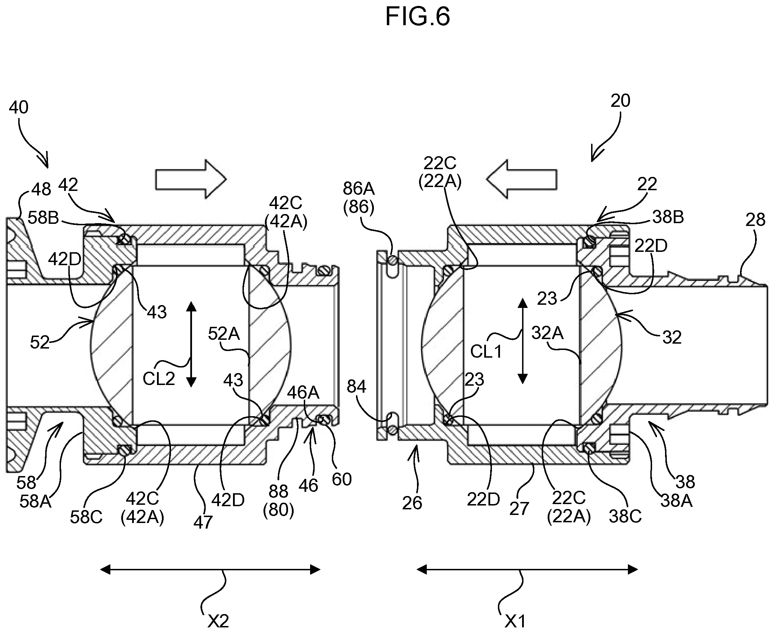

As illustrated in Fig. 1 through Fig. 3 and in Fig. 6, the inserted-into inlet portion 26 is provided at one end of the first tubular body 22, and is a portion into which an inserted inlet portion 46 of the second connecting member 40 is inserted. The inner diameter of this inserted-into inlet portion 26 is set to be larger than the inner diameter of the first pipe connecting portion 28.

### (First Pipe Connecting Portion 28)

As illustrated in Fig. 1 through Fig. 3 and in Fig. 6, the first pipe connecting portion 28 is provided at the another end of the first tubular body 22, and is the portion to which the first pipe P1 is connected. The first pipe connecting portion 28 of the present embodiment is connected to the first pipe P1 by being press-fit into the first pipe P1. Note that, in a case in which the first pipe P1 is a flexible hose, the portion at which the first pipe P1 and the first pipe connecting portion 28 overlap in the connected state may be fastened by using a band member for example from the outer side of the first pipe P1. By fastening by using a band member in this way, the connection of the first pipe P1 and the first pipe connecting portion 28 can be made to be more secure.

### (First Valve Mechanism 30)

As illustrated in Fig. 2, Fig. 3 and Fig. 6, the first valve mechanism 30 is a mechanism that opens and closes the internal flow path of the first tubular body 22. The first valve mechanism 30 has the first valve body 32 and an operation portion 36.

As illustrated in Fig. 2 and Fig. 3, the first valve body 32 opens and closes the internal flow path of the first tubular body 22. A communication hole 32A is provided in the first valve body 32. In the state in which the axial direction of the communication hole 32A of the first valve body 32 (hereinafter appropriately called "axial direction CL1") and the axial direction of the first tubular body 22 coincide with one another (see Fig. 2), the interior of the inserted-into inlet portion 26 and the interior of the first pipe connecting portion 28 communicate through the interior of the communication hole 32A. Due thereto, fluid can flow within the first tubular body 22. Namely, in the state in which the axial direction of the communication hole 32A of the first valve body 32 and the axial direction of the first tubular body 22 coincide, the internal flow path of the first tubular body 22 is completely open. Note that, hereinafter, the state in which the axial direction of the communication hole 32A and the axial direction of the first tubular body 22 coincide is called the open flow path state of the first tubular body 22. Here, "coincide" includes for example, in addition to the axial direction of the communication hole 32A and the axial direction of the first tubular body 22 completely coinciding with one another, cases in which there is tilting of around ± 5°.

Further, in the state in which the axial direction CL1 of the communication hole 32A of the first valve body 32 and the axial direction of the first tubular body 22 are orthogonal to one another (see Fig. 3), the interior of the communication hole 32A, and the interior of the inserted-into inlet portion 26 and the interior of the first pipe connecting portion 28, do not communicate with one another. Due thereto, flow of fluid within the first tubular body 22 is stopped. Note that, hereinafter, the state in which the axial direction of the communication hole 32A and the axial direction of the first tubular body 22 are orthogonal is called the closed flow path state of the first tubular body 22. Here, "orthogonal" includes for example, in addition to the axial direction of the communication hole 32A and the axial direction of the first tubular body 22 being perfectly orthogonal, cases in which there is tilting of 90° ± around 5°.

Further, a fit-in groove 32B, which extends in the same direction as the axial direction CL1 of the communication hole 32A, is provided in the outer peripheral surface of the first valve body 32. Distal end portion 34A of the first valve rod 34 that passes-through the through-hole 22B is fit in this fit-in groove 32B. When rotational force is applied to the first valve rod 34, rotational force is transmitted to the fit-in groove 32B via the distal end portion 34A. When rotational force is transmitted to the first valve body 32, the first valve body 32 rotates within the first accommodating portion 22A. Therefore, in the open flow path state of the first tubular body 22, the fit-in groove 32B faces in the same direction as the axial direction X1 of the first tubular body 22, and, in the closed flow path state of the first tubular body 22, the fit-in groove 32B faces in a direction orthogonal to the axial direction X1 of the first tubular body 22.

The operation portion 36 operates the opening/closing operation of the internal flow path of the first tubular body 22 by the first valve body 32. This operation portion 36 is provided at the outer periphery of the first tubular body 22. Specifically, the operation portion 36 is fixed to the another end portion of the first valve rod 34. Note that the operation portion 36 of the present embodiment is a handle for operation as an example. Due to this operation handle being grasped and turned, the first valve body 32 rotates together with the first valve rod 34 within the first accommodating portion 22A.

Note that, in the present embodiment, in the closed flow path state of the first tubular body 22, when a convex portion 36A provided at the operation portion 36 is rotated forward (clockwise) around the first valve rod 34 as the central axis, at the position at which the closed flow path state of the first tubular body 22 arises, the convex portion 36A abuts a stopper 22E provided at the outer peripheral surface of the first tubular body 22, and rotation is impeded. On the other hand, in the closed flow path state of the first tubular body 22, when the convex portion 36A provided at the operation portion is rotated reversely (counterclockwise) around the first valve rod 34 as the central axis, at the position at which the open flow path state of the first tubular body 22 arises, the convex portion 36A abuts a stopper 22F provided at the outer peripheral surface of the first tubular body 22, and rotation is impeded.

### [Second Connecting Member 40]

As illustrated in Fig. 2 and Fig. 3, the second connecting member 40 has a second tubular body 42, the inserted inlet portion 46, a second pipe connecting portion 48, a second valve mechanism 50, and the sealing member 60.

### (Second Tubular Body 42)

As illustrated in Fig. 2 and Fig. 3, the second tubular body 24 structures the main body portion of the second connecting member 40. The inserted inlet portion 46 is provided at an axial direction one end of the second tubular body 24. Further, the second pipe connecting portion 48, to which the second pipe P2 is connected, is provided at the axial direction another end of the second tubular body 42.

Note that, hereinafter, the axial direction of the second tubular body 24 is indicated by arrow X2.

As illustrated in Fig. 2 and Fig. 3, a second valve body 52 that structures the second valve mechanism 50 is disposed at the interior (hereinafter also called internal flow path) of the second tubular body 42. Specifically, a second accommodating portion 42A in which the second valve body 52 is accommodated is provided at the interior of the second tubular body 42. The second valve body 52 is accommodated in a rotatable state in this second accommodating portion 42A. Note that an enlarged diameter portion 47 is provided between the inserted inlet portion 46 and the second pipe connecting portion 48 in the axial direction of the second tubular body 42, and the interior of this enlarged diameter portion 47 structures the second accommodating portion 42A.

Further, a through-hole 42B through which a second valve rod 54 (details described later), which is for rotating the second valve body 52 and opening and closing the internal flow path of the second tubular body 42, passes is formed in the enlarged diameter portion 47 of the second tubular body 42.

Sealing grooves 42D are respectively formed in a wall surface 42C that structures the second accommodating portion 42A, at the both sides with the through-hole 42B disposed therebetween in the axial direction X2 of the second tubular body 42. Each of the sealing grooves 42D is continuous in the peripheral direction of the second tubular body 42. An annular sealing member 43 is accommodated in each of the sealing grooves 42D. These sealing members 43 contact the surface of the second valve body 52, respectively. As an example, an O-ring whose cross-sectional shape is circular is used as the sealing member 43 of the present embodiment, but the present disclosure is not limited to this structure. For example, a sealing member whose cross-sectional shape is polygonal may be used. A ball seat is an example of a sealing member whose cross-sectional shape is quadrangular.

Note that, as illustrated in Fig. 2 and Fig. 3, the second tubular body 42 of the present embodiment is structured by a tube member 57 that is at the inserted inlet portion 46 side and a tube member 58 that is at the second pipe connecting portion 48 side. The second tubular body 42 is formed by assembling the tube member 58 to the tube member 57. Further, the tube member 57 includes the inserted inlet portion 46 and a portion of the enlarged diameter portion 47. The tube member 58 includes the second pipe connecting portion 48 and the remaining portion of the enlarged diameter portion 47. Specifically, the tube member 57 includes the peripheral wall of the enlarged diameter portion 47, and a side wall portion 57A that connects this peripheral wall and the proximal end of the inserted inlet portion 46. Further, the tube member 58 includes a flange portion 58A that projects out from the proximal end of the second pipe connecting portion 48. This flange portion 58A is fit into an opening portion, which is at the side opposite the inserted inlet portion 46, of the enlarged diameter portion 47. A groove 58B that is continuous in the peripheral direction is provided at the peripheral edge portion of the flange portion 58A. An O-ring 58C is accommodated in this groove 58B. The O-ring 58C is disposed between the bottom surface of the groove 58B at the flange portion 58A and the inner peripheral surface of the enlarged diameter portion 47, and seals the space between the flange portion 58A and the enlarged diameter portion 47.

### (Inserted Inlet Portion 46)

As illustrated in Fig. 2 and Fig. 3, the inserted inlet portion 46 is provided at one end of the second tubular body 42, and is the portion inserted into the inserted-into inlet portion 26. The inner diameter of this inserted inlet portion 46 is set to be the same size as the inner diameter of the second pipe connecting portion 48. Here, "same" includes for example, in addition to the inner diameter of the inserted inlet portion 46 and the inner diameter of the second pipe connecting portion 48 being exactly the same size, cases in which the inner diameter of the second pipe connecting portion 48 is within the range of ± 5% of the inner diameter of the inserted inlet portion 46.

An annular accommodation groove 46A, which is continuous in the peripheral direction of the inserted inlet portion 46, is provided in the outer peripheral surface of the inserted inlet portion 46. The sealing member 60 is accommodated in this accommodation groove 46A.

### (Second Pipe Connecting Portion 48)

As illustrated in Fig. 2 and Fig. 3, the second pipe connecting portion 48 is provided at the another end of the second tubular body 42, and is the portion to which the second pipe P2 is connected. The second pipe connecting portion 48 of the present embodiment is a flange portion that is connected to a flange portion mounted to the end portion of the second pipe P2. The second pipe P2 and the second pipe connecting portion 48 are connected due to the flange portion of the second pipe P2 and the second pipe connecting portion 48 being fastened together by bolts for example.

### (Second Valve Mechanism 50)

As illustrated in Fig. 2 and Fig. 3, the second valve mechanism 50 is a mechanism that opens and closes the internal flow path of the second tubular body 42. The second valve mechanism 50 has the second valve body 52 and an operation portion 56.

As illustrated in Fig. 2 and Fig. 3, the second valve body 52 opens and closes the internal flow path of the second tubular body 42. A communication hole 52A is provided in the second valve body 52. In the state in which the axial direction of the communication hole 52A of the second valve body 52 (hereinafter appropriately called "axial direction CL2") and the axial direction of the second tubular body 42 coincide with one another, the interior of the inserted inlet portion 46 and the interior of the second pipe connecting portion 48 communicate through the interior of the communication hole 52A. Due thereto, fluid can flow within the second tubular body 42. Namely, in the state (see Fig. 2) in which the axial direction of the communication hole 52A of the second valve body 52 and the axial direction of the second tubular body 42 coincide, the internal flow path of the second tubular body 42 is completely open. Note that, hereinafter, the state in which the axial direction of the communication hole 52A and the axial direction of the second tubular body 42 coincide is called the open flow path state of the second tubular body 42. Here, "coincide" includes for example, in addition to the axial direction of the communication hole 52A and the axial direction of the second tubular body 42 completely coinciding with one another, cases in which there is tilting of around ± 5°.

Further, in the state (see Fig. 3) in which the axial direction CL2 of the communication hole 52A of the second valve body 52 and the axial direction of the second tubular body 42 are orthogonal to one another, the interior of the communication hole 52A, and the interior of the inserted inlet portion 46 and the interior of the second pipe connecting portion 48, do not communicate with one another. Due thereto, flow of fluid within the second tubular body 42 is stopped. Note that, hereinafter, the state in which the axial direction of the communication hole 52A and the axial direction of the second tubular body 42 are orthogonal is called the closed flow path state of the second tubular body 42. Here, "orthogonal" includes for example, in addition to the axial direction of the communication hole 52A and the axial direction of the second tubular body 42 being perfectly orthogonal, cases in which there is tilting of 90° ± around 5°.

Further, a fit-in groove 52B, which extends in the same direction as the axial direction CL2 of the communication hole 52A, is provided in the outer peripheral surface of the second valve body 52. Distal end portion 54A of the second valve rod 54 that passes-through the through-hole 42B is fit in this fit-in groove 52B. When rotational force is applied to the second valve rod 54, rotational force is transmitted to the fit-in groove 52B via the distal end portion 54A. When rotational force is transmitted to the second valve body 52, the second valve body 52 rotates within the second accommodating portion 42A. Therefore, in the open flow path state of the second tubular body 42, the fit-in groove 52B faces in the same direction as the axial direction X2 of the second tubular body 42, and, in the closed flow path state of the second tubular body 42, the fit-in groove 52B faces in a direction orthogonal to the axial direction X2 of the second tubular body 42.

The operation portion 56 operates the opening/closing operation of the internal flow path of the second tubular body 42 by the second valve body 52. This operation portion 56 is provided at the outer periphery of the second tubular body 42. Specifically, the operation portion 56 is fixed to the another end portion of the second valve rod 54. Note that the operation portion 56 of the present embodiment is a handle for operation as an example. Due to this operation handle being grasped and turned, the second valve body 52 rotates together with the second valve rod 54 within the second accommodating portion 42A.

Note that, in the present embodiment, in the closed flow path state of the second tubular body 42, when a convex portion 56A provided at the operation portion 56 is rotated reversely (counterclockwise) around the second valve rod 54 as the central axis, at the position at which the open flow path state of the second tubular body 42 arises, the convex portion 56A abuts a stopper 42E provided at the outer peripheral surface of the second tubular body 42, and rotation is impeded. On the other hand, in the open flow path state of the second tubular body 42, when the convex portion 56A provided at the operation portion 56 is rotated forward (counterclockwise) around the second valve rod 54 as the central axis, at the position at which the closed flow path state of the second tubular body 42 arises, the convex portion 56A abuts a stopper 42F provided at the outer peripheral surface of the second tubular body 42, and rotation is impeded.

### (Sealing Member 60)

The sealing member 60 is a member that is disposed between the inserted inlet portion 46 and the inserted-into inlet portion 26, and seals the space between the inserted inlet portion 46 and the inserted-into inlet portion 26. Specifically, the sealing member 60 is formed in an annular shape, and seals the space between the inserted inlet portion 46 and the inserted-into inlet portion 26 due to the inner peripheral portion of the sealing member 60 contacting the outer peripheral surface of the inserted inlet portion 46 and the outer peripheral portion of the sealing member 60 contacting the inner peripheral surface of the inserted-into inlet portion 26. As an example, an O-ring whose cross-sectional shape is circular is used as the sealing member 60 of the present embodiment. Further, the bottom surface of the accommodation groove 46A in which the sealing member 60 is accommodated, and the like, also are included as the outer peripheral surface of the inserted inlet portion 46.

Further, in the present embodiment, the sealing member 60 is fit on the outer periphery of the inserted inlet portion 46. In other words, the sealing member 60 is accommodated in the accommodation groove 46A that is provided in the outer peripheral surface of the inserted inlet portion 46. Due to the sealing member 60 being accommodated in the accommodation groove 46A in this way, movement of the sealing member 60 in the axial direction X2 at the time when the inserted inlet portion 46 is inserted into the inserted-into inlet portion 26 can be restricted.

Note that, because the first connecting member 20 has the inserted-into inlet portion 26, and the second connecting member 40 has the inserted inlet portion 46, the first connecting member 20 can be replaced by the term female member, and the second connecting member 40 can be replaced by the term male member.

### [Locking Mechanism 80]

The locking mechanism 80 is a mechanism that maintains the inserted state in which the inserted inlet portion 46 is inserted in the inserted-into inlet portion 26, and that allows relative rotation of the first connecting member 20 and the second connecting member 40 around the axes thereof.

As illustrated in Fig. 6, Fig. 8, Fig. 11 and Fig. 12, the locking mechanism 80 has a latch portion 82, a pair of slits 84 and a locking member 86.

As illustrated in Fig. 6, the latch portion 82 is provided continuously in the peripheral direction at the outer peripheral surface of the inserted inlet portion 46 of the second tubular body 42, at further toward the second pipe connecting portion 48 side than the placement region of the sealing member 60. Here, the placement region of the sealing member 60 is the region where the sealing member 60 is placed on the outer peripheral surface of the inserted inlet portion 46, and, in the present embodiment, the region where the accommodation groove 46A is provided corresponds thereto.

Further, in the present embodiment, a locking groove 88 that is annular and is continuous in the peripheral direction is provided at the outer peripheral surface of the inserted inlet portion 46 at further toward the second pipe connecting portion 48 side than the placement region of the sealing member 60. The latch portion 82 is structured by the groove wall, which is at the side opposite the second pipe connecting portion 48 side, of the locking groove 88. Note that the present disclosure is not limited to the above-described structure, and an annular convex portion may be provided at the outer peripheral surface of the inserted inlet portion 46, and the latch portion 82 may be structured by the convex wall, which is at the second pipe connecting portion 48 side, of this convex portion.

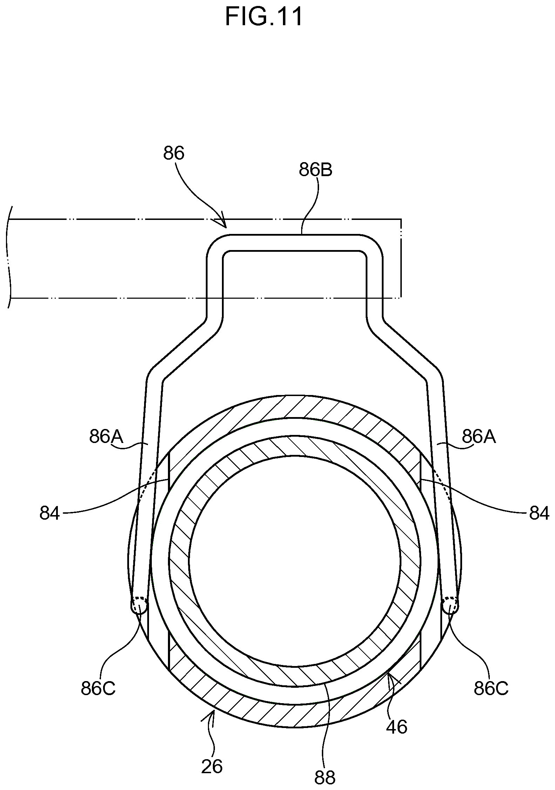

As illustrated in Fig. 11 through Fig. 14, the pair of slits 84 are respectively provided in the peripheral wall of the inserted-into inlet portion 26, at further toward a first pipe connecting portion 28 side than the placement region of the sealing member 60. Further, the pair of slits 84 are provided so as to face one another and respectively extend in the peripheral direction.

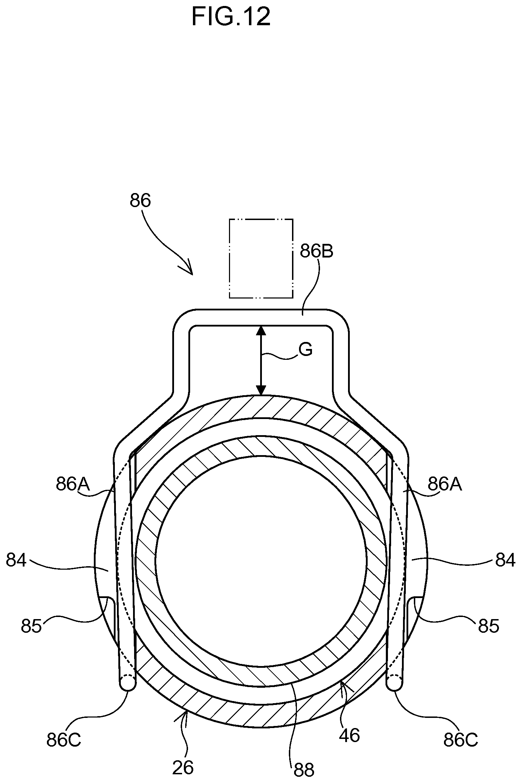

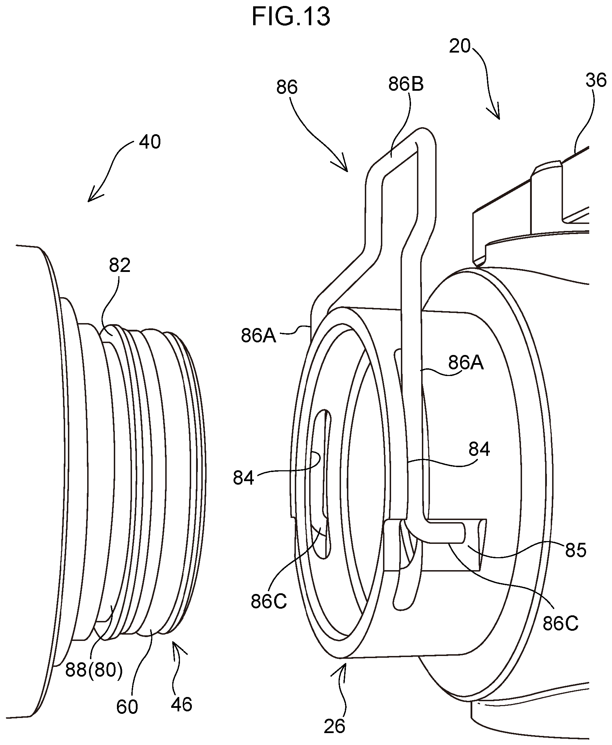

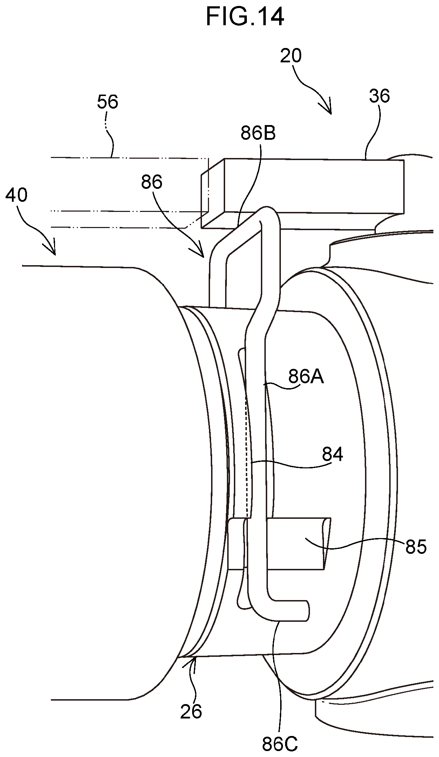

As illustrated in Fig. 11, the locking member 86 is attached to the outer periphery of the inserted-into inlet portion 26, so as to be movable between a first position and a second position that is further toward the radial direction inner side than the first position. Note that the first position of the locking member 86 is the position illustrated in Fig. 11 and Fig. 13. Further, the second position of the locking member 86 is the position illustrated in Fig. 12 and Fig. 14.

Further, the locking member 86 has a pair of pin portions 86A that are inserted into the pair of slits 84 respectively, and a connecting portion 86B that connects one end portions of the pair of pin portions 86A together.

At the locking member 86, as illustrated in Fig. 11 and Fig. 13, at the first position, the pair of pin portions 86A are not in the locking groove 88, and the pair of pin portions 86A respectively are not latched on the latch portion 82.

At the locking member 86, as illustrated in Fig. 12 and Fig. 14, at the second position, due to the pair of pin portions 86A respectively entering into the locking groove 88, the interval between the pair of pin portions 86A becomes more narrow than at the first position, and the pair of pin portions 86A respectively latch on the latch portion 82. Due thereto, the inserted state in which the inserted inlet portion 46 is inserted into the inserted-into inlet portion 26 is maintained.

Further, as illustrated in Fig. 12, in the state in which the locking member 86 is positioned at the second position, a gap G is formed between the connecting portion 86B and the outer peripheral surface of the inserted-into inlet portion 26. This gap G is preferably set to a size that is such that a tool or a finger of a worker can enter therein.

Further, the another end portions, which are positioned at the side opposite the connecting portion 86B, of the pair of pin portions 86A are respectively bent.

Further, concave portions 85, in which respective bent portions 86C of the pair of pin portions 86A are accommodated at the first position of the locking member 86, are provided in the outer peripheral surface of the inserted-into inlet portion 26 midway along the pair of slits 84. Specifically, when the locking member 86 is positioned at the first position, the respective bent portions 86C are accommodated in the respective concave portions 85, and therefore, falling-out of the locking member 86 at the time of transport or the like can be suppressed. On the other hand, when the locking member 86 is pushed-in from the first position to the second position, the interval between the pair of pin portions 86A widens, and the respective bent portions 86C ride-up over the respective concave portions 85. When the respective bent portions 86C ride-up over the respective concave portions 85, the pair of pin portions 86A are restored to their original states, and the interval between the pair of pin portions 86A narrows. Then, the pair of pin portions 86A enter into the locking groove 88 respectively, and the inserted state, in which the inserted inlet portion 46 is inserted in the inserted-into inlet portion 26, is maintained. Namely, the state in which the first connecting member 20 and the second connecting member 40 are connected is maintained by the locking mechanism 80.

Further, the present embodiment is structured such that, in the state in which the locking member 86 is positioned at the second position, and the first valve body 32 opens the internal flow path of the first tubular body 22 due to operation of the operation portion 36, as illustrated in Fig. 12 and Fig. 147, movement of the locking member 86 toward the first position is impeded due to a portion of the operation portion 36 abutting the locking member 86. Specifically, in a case in which the locking member 86 is positioned at the second position and the first tubular body 22 is in an open flow path state, because a portion of the operation portion 36 juts out above the connecting portion 86B of the locking member 86 as seen from the axial direction of the first valve rod 34, the locking member 86 inadvertently moving from the second position to the first position can be impeded.

Operation and effects of the present embodiment are described next.

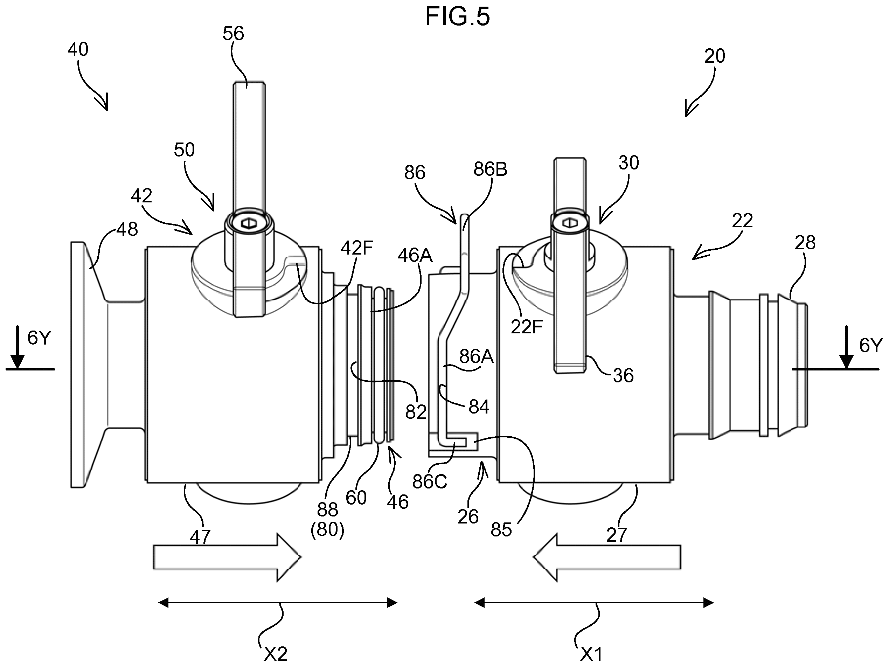

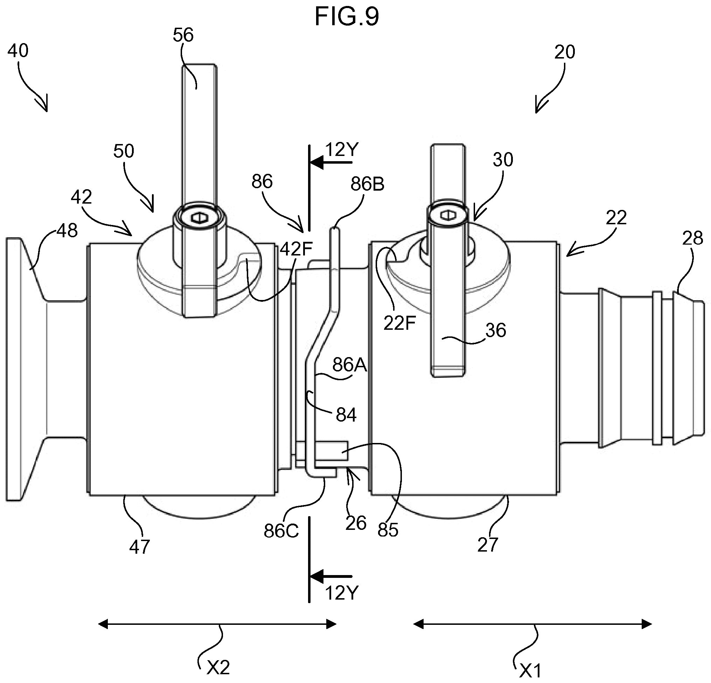

In the connecting structure S1 of the present embodiment, as illustrated in Fig. 5 through Fig. 8, the inserted inlet portion 46 of the second connecting member 40, at which the second pipe P2 is connected to the second pipe connecting portion 48, is inserted into the inserted-into inlet portion 26 of the first connecting member 20 at which the first pipe P1 is connected to the first pipe connecting portion 28. Further, as illustrated in Fig. 9 through Fig. 14, the first connecting member 20 and the second connecting member 40 are connected due to the locking mechanism 80 being made to function in the inserted state in which the inserted inlet portion 46 is inserted in the inserted-into inlet portion 26. Specifically, due to the locking member 86 being moved from the first position to the second position in the inserted state in which the inserted inlet portion 46 is inserted in the inserted-into inlet portion 26, the pair of pin portions 86A of the locking member 86 enter into the locking groove 88, and the above-described inserted state is maintained. Namely, the connected state of the first connecting member 20 and the second connecting member 40 is maintained.

Further, as illustrated in Fig. 2, in the connected state of the first connecting member 20 and the second connecting member 40, the space between the inserted inlet portion 46 and the inserted-into inlet portion 26 is sealed by the sealing member 60 that is annular. Therefore, by respectively operates the first valve mechanism 30 of the first connecting member 20 and the second valve mechanism 50 of the second connecting member 40, and respectively opening the internal flow path of the first tubular body 22 and the internal flow path of the second tubular body 42, the interior of the first pipe P1 and the interior of the second pipe P2 communicate via the internal flow path of the first tubular body 22 and the internal flow path of the second tubular body 42.

Here, in the above-described connecting structure S1, the locking mechanism 80 maintains the inserted state in which the inserted inlet portion 46 is inserted in the inserted-into inlet portion 26, and that allows relative rotation of the first connecting member 20 and the second connecting member 40 around the axes thereof. Therefore, even if excessive force acts in a twisting direction on at least one of the first pipe P1 connected to the first connecting member 20 and the second pipe P2 connected to the second connecting member 40, due to the first connecting member 20 and the second connecting member 40 that are in the connected state being relatively rotated around the axes thereof, excessive force in the twisting direction, which is applied to at least one pipe among the first pipe P1 and the second pipe P2, can be mitigated.

Moreover, in the connecting structure S1, due to the internal peripheral portion of the annular sealing member 60 contacting the outer peripheral surface of the inserted inlet portion 46, and the outer peripheral portion of the sealing member 60 contacting the inner peripheral surface of the inserted-into inlet portion 26, the space between the inserted inlet portion 46 and the inserted-into inlet portion 26 is sealed. Therefore, even if the first connecting member 20 and the second connecting member 40 that are in the connected state are rotated relatively around the axes thereof, the sealing effect by the sealing member 60 can be maintained.

In this way, in the above-described connecting structure S1, due to the first connecting member 20 and the second connecting member 40 that are in the connected state being rotated relatively around the axes thereof, excessive force in the twisting direction, which is applied to at least one pipe among the first pipe P1 and the second pipe P2, can be mitigated, and even if the first connecting member 20 and the second connecting member 40 are rotated relatively around the axes thereof, the sealing effect due to the sealing member 60 can be maintained. Therefore, for example, as compared with a structure in which a mechanism that can rotate relatively is built into each of the connecting members, the structures of the first connecting member 20 and the second connecting member 40 can be made to be simple.

Moreover, the connecting structure S1 uses a structure (an axial sealing structure) in which the inner peripheral portion of the annular sealing member 60 contacts the outer peripheral surface of the inserted inlet portion 46, and the outer peripheral portion of the sealing member 60 contacts the inner peripheral surface of the inserted-into inlet portion 26. By using this structure, in the connecting structure S1, the contact pressure of the sealing member 60 and the inserted-into inlet portion 26 is near uniform in the peripheral direction of the sealing member 60, and the contact pressure of the sealing member 60 and the inserted inlet portion 46 is near uniform in the peripheral direction of the sealing member. Due thereto, in the above-described connecting structure S1, the sealing performance is improved as compared with, for example, a structure (a planar sealing structure) in which the sealing surfaces of the connecting members are pushed against one another.

In this way, in accordance with the connecting structure S1 of the present embodiment, the performance of sealing the space between the first connecting member 20 and the second connecting member 40 can be improved while the structures of the first connecting member 20 and the second connecting member 40 are made simple.

Further, in the connecting structure S1 of the present embodiment, the sealing member 60 is fit on the outer periphery of the inserted inlet portion 46 of the second tubular body 42. Therefore, the sealing member 60 can be fit on the outer periphery of the inserted inlet portion 46 by the simple work of passing the inserted inlet portion 46 through the inner side of the annular sealing member 60.

Further, in the connecting structure S1 of the present embodiment, the annular accommodation groove 46A that is continuous in the peripheral direction is provided in the outer peripheral surface of the inserted inlet portion 46, and the sealing member 60 is accommodated in this accommodation groove 46A. Therefore, in the connecting structure S1, positioning of the sealing member 60 with respect to the inserted inlet portion 46 can be carried out easily by passing the inserted inlet portion 46 through the inner side of the annular sealing member 60 and accommodating the sealing member 60 in the accommodation groove 46A.

Further, in the connecting structure S1 of the present embodiment, when the locking member 86 is moved from the first position to the second position, the pair of pin portions 86A respectively latch on the latch portion 82, and the inserted state in which the inserted inlet portion 46 is inserted in the inserted-into inlet portion 26 is maintained. Namely, the connected state of the first connecting member 20 and the second connecting member 40 is maintained. Further, when the locking member 86 is moved from the second position to the first position, the pair of pin portions 86A do not latch on the latch portion 82, and therefore, it is possible to pull the inserted inlet portion 46 out from the inserted-into inlet portion 26. Namely, it is possible to cancel the connected state of the first connecting member 20 and the second connecting member 40. In this way, in the above-described connecting structure S1, the first connecting member 20 and the second connecting member 40 can be set in the connected state, and the connected state can be cancelled, by the simple operation of moving the locking member 86 between the first position and the second position.

Further, in the connecting structure S1 of the present embodiment, when the locking member 86 is positioned at the second position, the inserted state in which the inserted inlet portion 46 is inserted in the inserted-into inlet portion 26 is maintained due to the pair of pin portions 86A respectively being within the locking groove 88. Here, at the time of relative rotation of the first connecting member 20 and the second connecting member 40 around the axes thereof, the pair of pin portions 86A, which are in the locking groove 88, move along the locking groove 88 while being guided by the both groove walls of the locking groove 88. Therefore, clattering at the time when the first connecting member 20 and the second connecting member 40 are rotated relatively around the axes thereof can be suppressed.

Further, in the connecting structure S1 of the present embodiment, in the state in which the locking member 86 is positioned at the second position, a gap is formed between the connecting portion 86B and the outer peripheral surface of the inserted-into inlet portion 26. Here, the locking member 86 can be moved from the second position to the first position simply due to a finger or tool being placed into the gap G between the connecting portion 86B and the outer peripheral surface of the inserted-into inlet portion 26, and the connecting portion 86B being raised up with respect to the outer peripheral surface of the inserted-into inlet portion 26.

Further, in the connecting structure S1 of the present embodiment, when the locking member 86 is at the first position, the respective bent portions 86C of the pair of pin portions 86A are accommodated in the concave portions 85 of the inserted-into inlet portion 26, respectively. Therefore, it is easy to understand that the locking member 86 is at the first position. Further, the locking member 86 being moved from the first position to the second position by incorrect operation can be suppressed.

Further, in the connecting structure S1 of the present embodiment, in a state that is the inserted state in which the inserted inlet portion 46 is inserted in the inserted-into inlet portion 26 and is the state (the open flow path state) in which the locking member 86 is positioned at the second position and the first valve body 32 opens the internal flow path of the first tubular body 22 due to operation of the operation portion 36, movement of the locking member 86 from the second position to the first position is impeded due to a portion of the operation portion 36 abutting the locking member 86. In this way, in the connecting structure S1, in the open flow path state of the first tubular body 22, the locking member 86 cannot be moved from the second position to the first position. Therefore, the operation of pulling the inserted inlet portion 46 out from the inserted-into inlet portion 26 when the first tubular body 22 is in the open flow path state can be impeded. Due thereto, cancelling of the connection of the first connecting member 20 and the second connecting member 40 due to incorrect operation of the locking member 86 can be prevented.

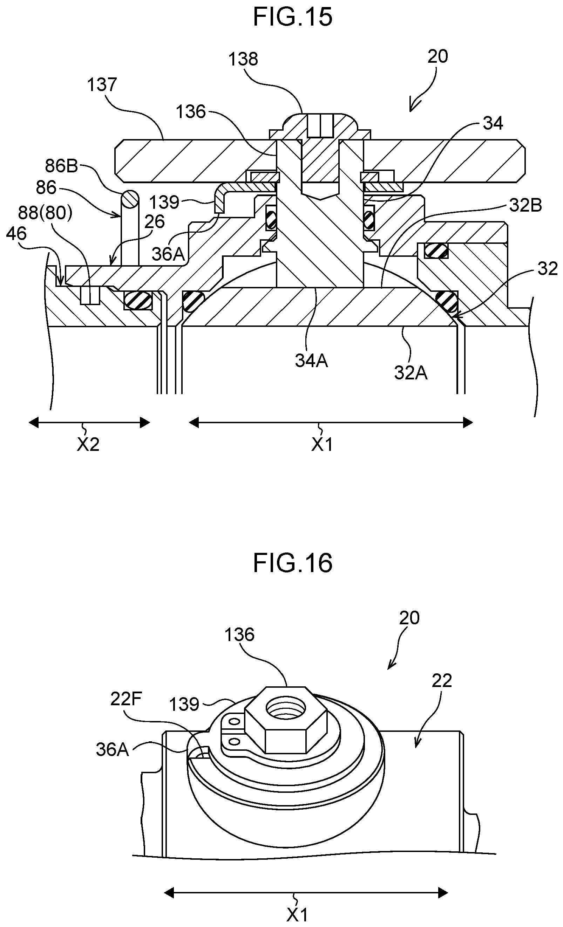

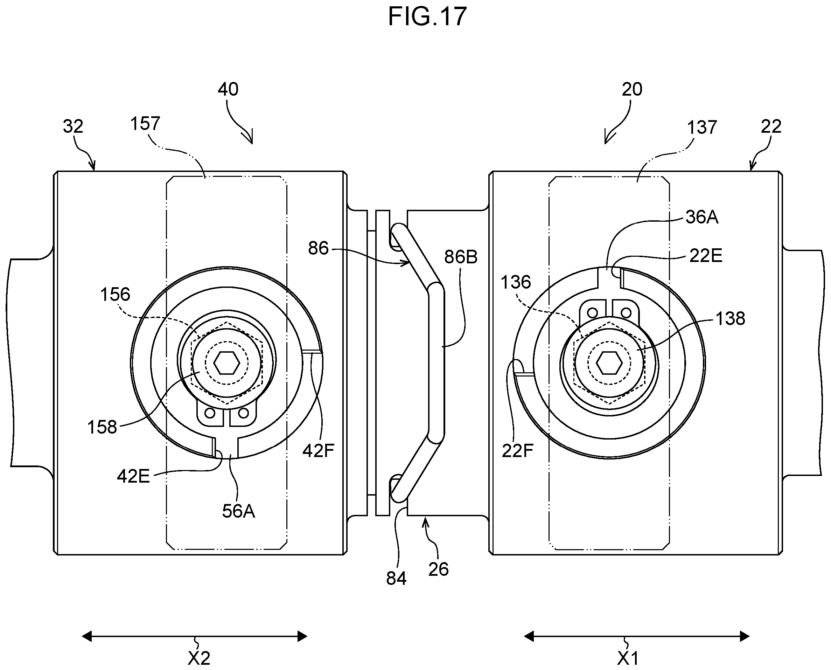

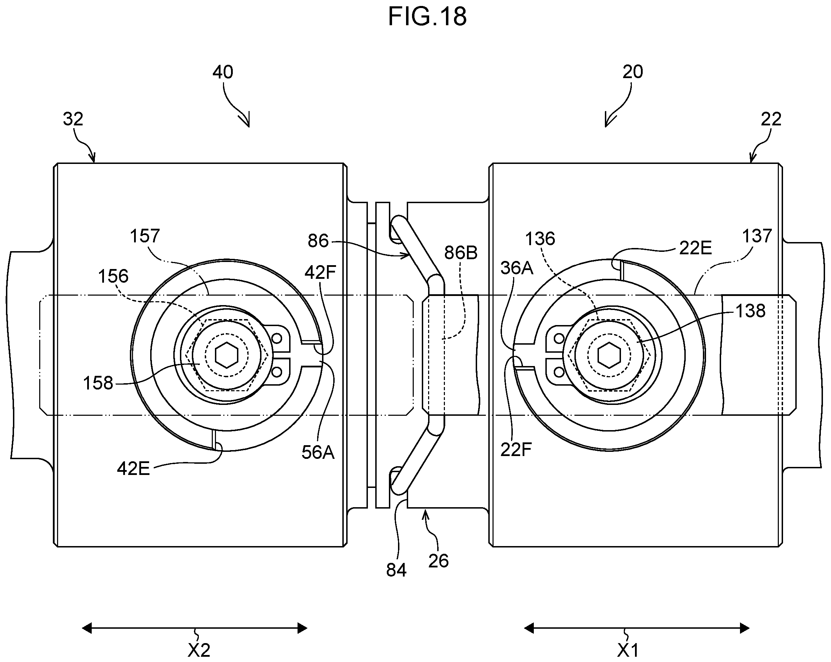

In the above-described embodiment, the operation portion 36 of the first connecting member 20 is an operation handle having the convex portion 36A, but the present disclosure is not limited to this structure. For example, an operation portion 136 illustrated in Fig. 16 through Fig. 18 may be used. This operation portion 136 is a hexagonal portion formed at the upper portion of the first valve rod 34. Because this operation portion 136 is hexagonal, it can be rotated by using a tool. Note that the operation portion 136 is not particularly limited to a hexagonal shape provided that it is a shape in which the width (interval) between two facing surfaces is the same. Namely, the shape of the operation portion 136 may be quadrangular or may be octagonal. Further, a plate 137 for preventing pulling-out of the locking member 86 that is at the second position is mounted to the operation portion 136 by using a screw member 138. Moreover, a plate 139 having the convex portion 36A is mounted to the lower portion of the operation portion 136 as a portion that prevents rotation of the operation portion 136. Note that an operation portion 156 may similarly be used for the operation portion 56 of the second connecting member 40 as well. This operation portion 156 is a hexagonal portion formed at the upper portion of the first valve rod 34. Because this operation portion 156 is hexagonal, it can be rotated by using a tool. Note that the operation portion 156 is not particularly limited to a hexagonal shape provided that it is a shape in which the width (interval) between two facing surfaces is the same. Namely, the shape of the operation portion 156 may be quadrangular or may be octagonal. Further, a plate 157 is mounted to the operation portion 156 by using a screw member 158. Note that this plate 157 may be omitted. Moreover, a plate 159 having the convex portion 56A is mounted to the lower portion of the operation portion 156 as a portion that prevents rotation of the operation portion 156. In a case of using the operation portion 136 and the operation portion 156 as described above, there is no need to provide an operation handle that is easily grasped by a worker, and therefore, the cost can be reduced.

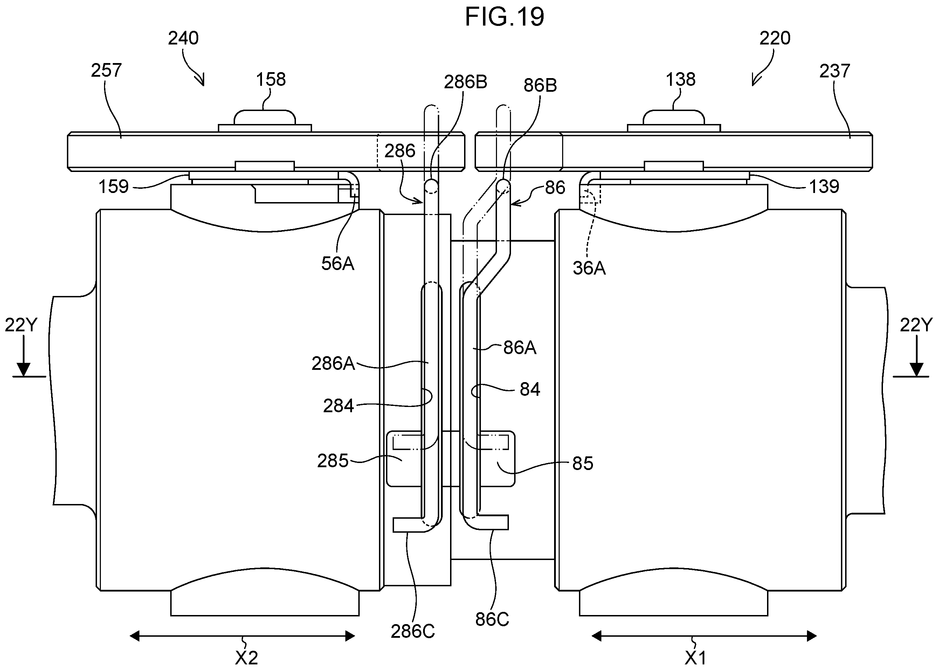

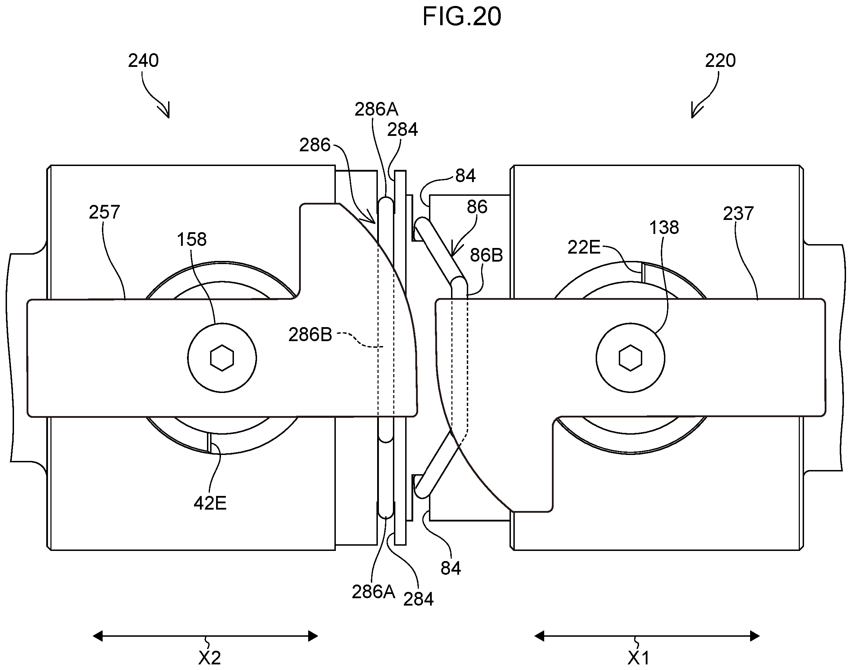

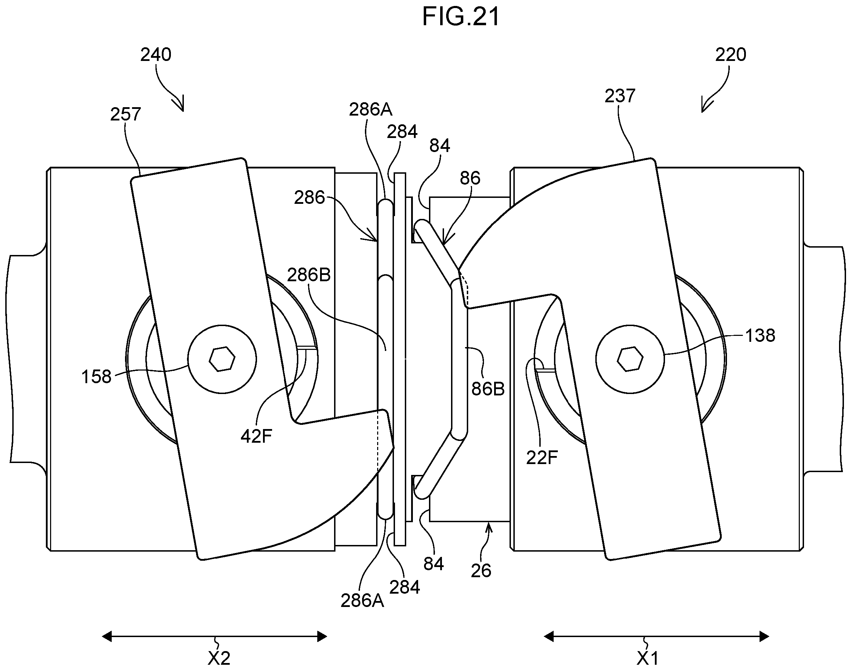

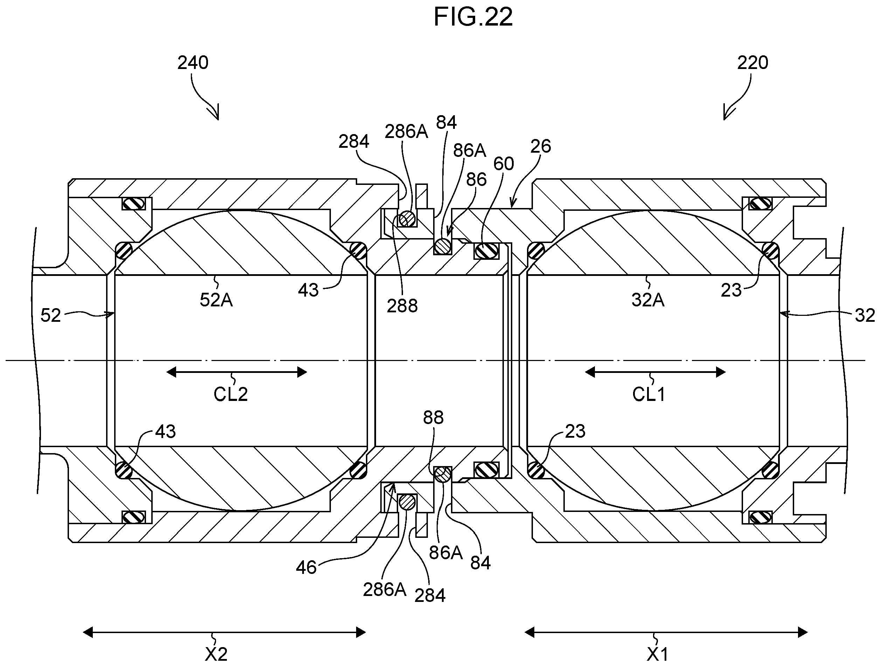

In the above-described embodiments, the locking member 86 is attached to the first connecting member 20, but the present disclosure is not limited to this structure. For example, a locking member may be attached to the second connecting member as well, Specifically, as illustrated in Fig. 19 through Fig. 22, the locking member 86 may be attached to a first connecting member 220, and a locking member 286 may be attached to a second connecting member 240. As illustrated in Fig. 22, a locking groove 288 that is continuous in the peripheral direction is provided at further toward the distal end side than the slits 84 of the inserted-into inlet portion 26 of the first connecting member 220. Further, this is structured such that an annular rib that is concentric is provided at the radial direction outer side of the inserted inlet portion 46 of the second connecting member 240, and the distal end of the inserted-into inlet portion 26 is placed in between the inserted inlet portion 46 and the annular rib. Further, a pair of slits 284 are formed in the annular rib. A pair of pin portions 286A of the locking member 286 are placed in the pair of slits 284. Note that the locking member 286 has a connecting portion 286B that connects one end portions of the pair of pin portions 286A together, and bent portions 286C where the another end portions are bent. Further, concave portions 285, into which the bent portions 286C are fit, are respectively provided in the outer periphery of the annular rib. Operation of this locking member 286 is similar to operation of the locking member 86. Further, the shape of a plate 237 of the first connecting member 220 is set such that operation of the locking member 86 cannot be carried out until the first valve body 32 completely closes the flow path. Similarly, the shape of a plate 257 of the second connecting member 240 is set such that operation of the locking member 286 cannot be carried out until the second valve body 52 completely closes the flow path. By forming such a structure, pulling-out of the inserted inlet portion 46 from the inserted-into inlet portion 26 is impeded in cases in which at least one of the first valve body 32 and the second valve body 52 is in an open state. Therefore, leakage at the time of pulling the inserted inlet portion 46 out from the inserted-into inlet portion 26 can be suppressed.

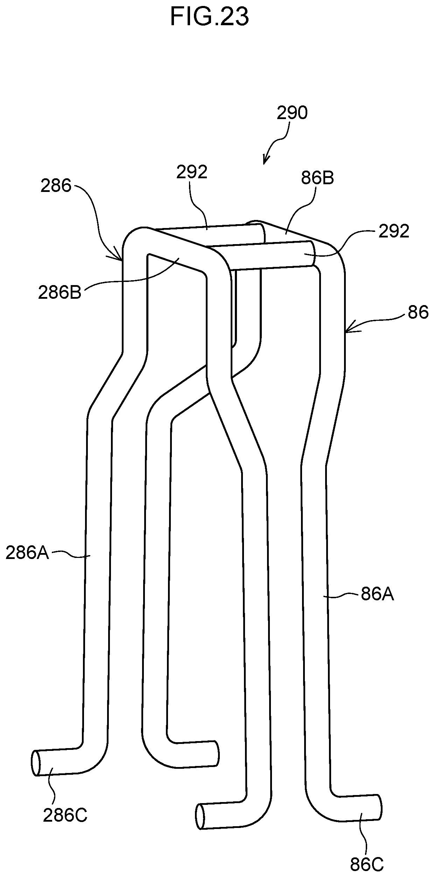

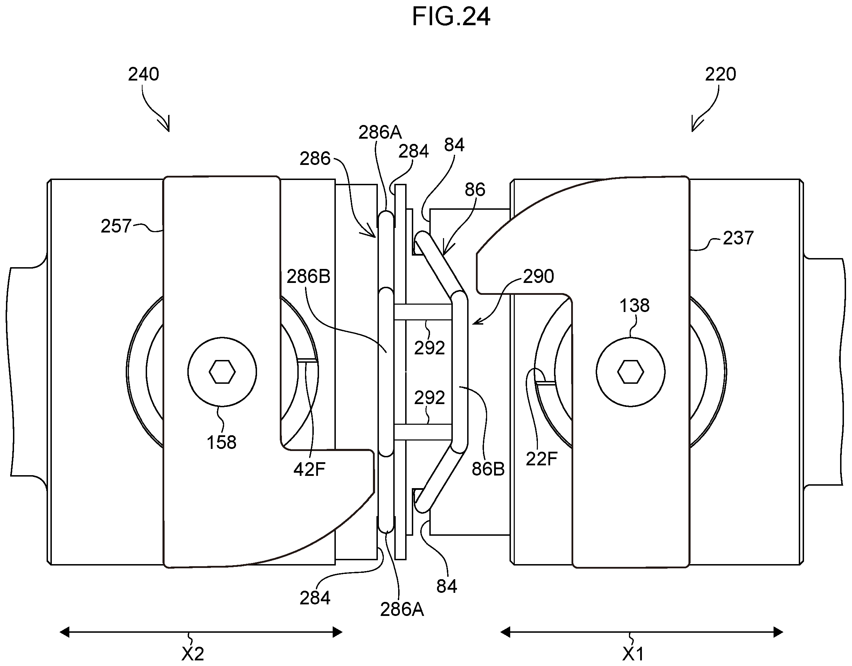

In the above-described embodiment, as illustrated in Fig. 19 through Fig. 22, the locking member 86 is attached to the first connecting member 220, and the locking member 286 is attached to the second connecting member 240, but the present disclosure is not limited to this structure. For example, a locking member 290 illustrated in Fig. 23 may be used in connecting the first connecting member 220 and the second connecting member 240. As illustrated in Fig. 23, the locking member 290 is a structure in which the locking member 86 and the locking member 286 are combined (are made integral). Specifically, the locking member 290 is structured by the connecting portion 86B of the locking member 86 and the connecting portion 286B of the locking member 286 being connected by a pair of connecting portions 292. As illustrated in Fig. 24, by using this locking member 290 to connect the first connecting member 220 and the second connecting member 240, in the same way as in the above-described embodiments, it is possible to impede pulling-out of the inserted inlet portion 46 from the inserted-into inlet portion 26 in cases in which at least one of the first valve body 32 and the second valve body 52 is in an open state. Further, as compared with a case in which the locking member 86 and the locking member 286 are separate, at the locking member 290, the connecting of, and the releasing of the connecting of, the first connecting member 220 and the second connecting member 240 can be carried out by a one-time operation, and therefore, the operations of connecting and cancelling connection are simple.

In the above-described embodiments, the first pipe P1 is connected to the first pipe connecting portion 28, and the second pipe P2 is connected to the second pipe connecting portion 48, but the structure of the present disclosure is not limited to this. For example, the structure of the first pipe connecting portion 28 and the structure of the second pipe connecting portion 48 may be switched such that the second pipe P2 is connected to the first pipe connecting portion 28 and the first pipe P1 is connected to the second pipe connecting portion 48. Further, the structure of the first pipe connecting portion 28 may be any structure provided that it can be connected to a targeted pipe. In the same way as the first pipe connecting portion 28, the second pipe connecting portion 48 as well may be any structure provided that it can be connected to a targeted pipe.

In the above-described embodiments, the sealing member 60 is fit as a single member on the outer periphery of the inserted inlet portion 46, but the present disclosure is not limited to this structure. For example, plural sealing members 60 may be fit on the outer periphery of the inserted inlet portion 46. In this case, it suffices to provide plural accommodation grooves 46A in the outer peripheral surface of the inserted inlet portion 46, and to accommodate the sealing members 60 in the plural accommodation grooves 46A, respectively.

In the above-described embodiments, a ball valve mechanism is used as the first valve mechanism 30, but the present disclosure is not limited to this. For example, a needle valve mechanism or a butterfly valve mechanism may be used as the first valve mechanism 30. Further, in the same way as the first valve mechanism 30, a needle valve mechanism or a butterfly valve mechanism may be used instead of a ball valve mechanism as the second valve mechanism 50 as well.

Although forms that embody the present disclosure have been described above by using embodiments as examples, these embodiments are examples, and the technique of the present disclosure can be implemented by being changed in various ways within a scope that does not depart from the gist thereof. Further, it goes without saying that the scope of the right of the present disclosure is not limited to these embodiments.

The following notes are additionally disclosed in relation to the above-described embodiments.

### (Note 1)

A pipe connecting structure, comprising:
a first connecting member that includes a first tubular body, an inserted-into inlet portion that is provided at one end of the first tubular body, a first pipe connecting portion provided at another end of the first tubular body and to which a first pipe is connected, and a first valve mechanism able to open and close an internal flow path of the first tubular body;
a second connecting member that includes a second tubular body, an inserted inlet portion that is provided at one end of the second tubular body and that is inserted in the inserted-into inlet portion, a second pipe connecting portion provided at another end of the second tubular body and to which a second pipe is connected, and a second valve mechanism able to open and close an internal flow path of the second tubular body;
a sealing member that is annular, that is disposed between the inserted inlet portion and the inserted-into inlet portion, and that seals a space between the inserted inlet portion and the inserted-into inlet portion due to an inner peripheral portion of the sealing member contacting an outer peripheral surface of the inserted inlet portion and an outer peripheral portion of the sealing member contacting an inner peripheral surface of the inserted-into inlet portion; and
a locking mechanism that maintains an inserted state, in which the inserted inlet portion is inserted in the inserted-into inlet portion, and that allows relative rotation of the first connecting member and the second connecting member around axes thereof.

In the pipe connecting structure of Note 1, the inserted inlet portion of the second connecting member, at which the second pipe is connected to the second pipe connecting portion, is inserted into the inserted-into inlet portion of the first connecting member at which the first pipe is connected to the first pipe connecting portion. The first connecting member and the second connecting member are connected due to the locking mechanism being made to function in this inserted state. In the connected state of the first connecting member and the second connecting member, the space between the inserted inlet portion and the inserted-into inlet portion is sealed by the sealing member that is annular. Therefore, by respectively operates the first valve mechanism of the first connecting member and the second valve mechanism of the second connecting member, and respectively opening the internal flow path of the first tubular body and the internal flow path of the second tubular body, the interior of the first pipe and the interior of the second pipe communicate via the internal flow path of the first tubular body and the internal flow path of the second tubular body.

Here, in the above-described pipe connecting structure, the locking mechanism maintains the inserted state in which the inserted inlet portion is inserted in the inserted-into inlet portion, and that allows relative rotation of the first connecting member and the second connecting member around the axes thereof. Therefore, even if excessive force acts in a twisting direction on at least one of the first pipe that is connected to the first connecting member and the second pipe that is connected to the second connecting member, due to the first connecting member and the second connecting member that are in the connected state being relatively rotated around the axes thereof, excessive force in the twisting direction, which is applied to at least one pipe among the first pipe and the second pipe, can be mitigated.

Moreover, in the above-described pipe connecting structure, the space between the inserted inlet portion and the inserted-into inlet portion is sealed due to the inner peripheral portion of the annular sealing member contacting the outer peripheral surface of the inserted inlet portion, and the outer peripheral portion of the sealing member contacting the inner peripheral surface of the inserted-into inlet portion. Therefore, even if the first connecting member and the second connecting member that are in the connected state are rotated relatively around the axes thereof, the sealing effect by the sealing member can be maintained.

In this way, in the above-described pipe connecting structure, due to the first connecting member and the second connecting member that are in the connected state being rotated relatively around the axes thereof, excessive force in the twisting direction, which is applied to at least one pipe among the first pipe and the second pipe, can be mitigated, and even if the first connecting member and the second connecting member are rotated relatively around the axes thereof, the sealing effect due to the sealing member can be maintained. Therefore, for example, as compared with a structure in which a mechanism that can rotate relatively is built into each of the connecting members, the structures of the first connecting member and the second connecting member can be made to be simple.

Moreover, the above-described pipe connecting structure uses a structure (an axial sealing structure) in which the inner peripheral portion of the annular sealing member contacts the outer peripheral surface of the inserted inlet portion, and the outer peripheral portion of the sealing member contacts the inner peripheral surface of the inserted-into inlet portion. Therefore, the contact pressure of the sealing member and the inserted-into inlet portion is near uniform in the peripheral direction of the sealing member, and the contact pressure of the sealing member and the inserted inlet portion is near uniform in the peripheral direction of the sealing member. Thus, in the above-described pipe connecting structure, the sealing performance is improved as compared with a structure (a planar sealing structure) in which the sealing surfaces of the connecting members are pushed against one another.

In this way, in accordance with the pipe connecting structure of Note 1, the performance of sealing the space between the first connecting member and the second connecting member can be improved while the structures of the first connecting member and the second connecting member are made simple.

### (Note 2)

The pipe connecting structure of Note 1, wherein the sealing member is fit on an outer periphery of the inserted inlet portion.

In the pipe connecting structure of Note 2, the sealing member can be fit on the outer periphery of the inserted inlet portion by the simple work of passing the inserted inlet portion through the inner side of the annular sealing member.

### (Note 3)

The pipe connecting structure of Note 2, wherein:
an accommodation groove that is annular and is continuous in a peripheral direction is provided in the outer peripheral surface of the inserted inlet portion, and
the sealing member is accommodated in the accommodation groove.

In the pipe connecting structure of Note 3, positioning of the sealing member with respect to the inserted inlet portion can be carried out easily by passing the inserted inlet portion through the inner side of the annular sealing member and accommodating the sealing member in the accommodation groove.

### (Note 4)

The pipe connecting structure of any one of Note 1 through Note 3, wherein the locking mechanism includes:
a latch portion that is provided continuously in a peripheral direction at the outer peripheral surface of the inserted inlet portion at further toward a second pipe connecting portion side than a placement region of the sealing member;
a pair of slits extending in the peripheral direction and provided in a peripheral wall of the inserted-into inlet portion so as to face one another, at further toward a first pipe connecting portion side than the placement region of the sealing member; and
a locking member that has a pair of pin portions inserted into the pair of slits respectively and that is fit on an outer periphery of the inserted-into inlet portion so as to be movable between a first position and a second position that is further toward a radial direction inner side than the first position, and, at the first position, the pair of pin portions do not latch on the latch portion, and, at the second position, an interval between the pair of pin portions is more narrow than at the first position, and the pair of pin portions respectively latch on the latch portion, and the locking member maintains the inserted state.

In the pipe connecting structure of Note 4, when the locking member is moved from the first position to the second position, the pair of pin portions respectively latch on the latch portion, and the inserted state in which the inserted inlet portion is inserted in the inserted-into inlet portion is maintained. Namely, the connected state of the first connecting member and the second connecting member is maintained. Further, when the locking member is moved from the second position to the first position, the pair of pin portions do not latch on the latch portion, and therefore, it is possible to pull the inserted inlet portion out from the inserted-into inlet portion. Namely, it is possible to cancel the connected state of the first connecting member and the second connecting member. In this way, in the above-described pipe connecting structure, the first connecting member and the second connecting member can be set in the connected state, and the connected state can be cancelled, by the simple operation of moving the locking member between the first position and the second position.

### (Note 5)

The pipe connecting structure of Note 4, wherein:
a locking groove that is annular and is continuous in the peripheral direction is provided in the outer peripheral surface of the inserted inlet portion at further toward the second pipe connecting portion side than the placement region of the sealing member,
the latch portion is structured by a groove wall, which is at a side opposite the second pipe connecting portion side, of the locking groove, and
when the locking member is positioned at the second position, the pair of pin portions are respectively within the locking groove.

In the pipe connecting structure of Note 5, when the locking member is positioned at the second position, the inserted state in which the inserted inlet portion is inserted in the inserted-into inlet portion is maintained due to the pair of pin portions respectively being within the locking groove. Here, at the time of relative rotation of the first connecting member and the second connecting member around the axes thereof, the pair of pin portions, which are in the locking groove, move along the locking groove while being guided by the both groove walls of the locking groove. Therefore, clattering at the time when the first connecting member and the second connecting member are rotated relatively around the axes thereof can be suppressed.

### (Note 6)

The pipe connecting structure of Note 5, wherein the locking member includes a connecting portion that connects one end portions of the pair of pin portions together, and, in a state in which the locking member is positioned at the second position, a gap is formed between the connecting portion and an outer peripheral surface of the inserted-into inlet portion.

In the pipe connecting structure of Note 6, in the state in which the locking member is positioned at the second position, a gap is formed between the connecting portion and the outer peripheral surface of the inserted-into inlet portion. Here, the locking member can be moved from the second position to the first position simply due to a finger or tool being placed into the gap between the connecting portion and the outer peripheral surface of the inserted-into inlet portion, and the connecting portion being raised up with respect to the outer peripheral surface of the inserted-into inlet portion.

### (Note 7)

The pipe connecting structure of Note 6, wherein:
another end portions of the pair of pin portions respectively are bent, and
concave portions, which accommodate bent portions of the pair of pin portions at the first position, are respectively provided in the outer peripheral surface of the inserted-into inlet portion, midway along the pair of slits.

In the pipe connecting structure of Note 7, when the locking member is at the first position, the respective bent portions of the pair of pin portions are accommodated in the concave portions of the inserted-into inlet portion, respectively. Therefore, it is easy to understand that the locking member is at the first position. Further, the locking member being moved from the first position to the second position by incorrect operation can be suppressed.

### (Note 8)

The pipe connecting structure of any one of Note 4 through Note 7, wherein:
the first valve mechanism includes a valve body that opens and closes the internal flow path of the first tubular body, and an operation portion that is provided at an outer periphery of the first tubular body and operates an opening/closing operation of the valve body, and
in a state in which the locking member is positioned at the second position and the valve body opens the internal flow path of the first tubular body due to operation of the operation portion, movement of the locking member to the first position is impeded due to a portion of the operation portion abutting the locking member.

In the pipe connecting structure of Note 8, in a state that is the inserted state in which the inserted inlet portion is inserted in the inserted-into inlet portion and is the state in which the locking member is positioned at the second position and the valve body opens the internal flow path of the first tubular body due to operation of the operation portion, movement of the locking member from the second position to the first position is impeded due to a portion of the operation portion abutting the locking member. In this way, in the pipe connecting structure, in the state in which the internal flow path of the first tubular body has been opened, the locking member cannot be moved from the second position to the first position. Therefore, in the state in which the internal flow path of the first tubular body is open, the operation of pulling the inserted inlet portion out from the inserted-into inlet portion can be impeded. Due thereto, cancelling of the connection of the first connecting member and the second connecting member due to incorrect operation of the locking member can be prevented.

### (Note 9)

The pipe connecting structure of any one of Note 1 through Note 7, wherein:
the first valve mechanism includes a first valve body that opens and closes the internal flow path of the first tubular body, and a first operation portion that is provided at an outer periphery of the first tubular body and operates an opening/closing operation of the first valve body,
the second valve mechanism includes a second valve body that opens and closes the internal flow path of the second tubular body, and a second operation portion that is provided at an outer periphery of the second tubular body and that operates an opening/closing operation of the second valve body, and
in a case in which, in the inserted state, at least one of the first valve body or the second valve body is in an open state, the locking mechanism impedes pulling-out of the inserted inlet portion from the inserted-into inlet portion.

In the pipe connecting structure of Note 9, the locking mechanism impedes pulling-out of the inserted inlet portion from the inserted-into inlet portion in cases in which at least one of the first valve body or the second valve body is in an open state. Therefore, leakage at the time of pulling the inserted inlet portion out from the inserted-into inlet portion can be suppressed.

### (Note 10)

A connecting member, comprising:
a tubular body;
an inserted inlet portion that is provided at one end of the tubular body and that is inserted into an inserted-into inlet portion of an object of connection;
a sealing member that is annular and is fit on an outer periphery of the inserted inlet portion, and that seals a space between the inserted inlet portion and the inserted-into inlet portion due to, in an inserted state in which the inserted inlet portion is inserted into the inserted-into inlet portion, an inner peripheral portion of the sealing member contacting an outer peripheral surface of the inserted inlet portion and an outer peripheral portion of the sealing member contacting an inner peripheral surface of the inserted-into inlet portion;
a pipe connecting portion provided at another end of the tubular body and to which a pipe is connected; and
a valve mechanism able to open and close an internal flow path of the tubular body.

In the connecting member of Note 10, the connecting member is connected to an object of connection due to the inserted inlet portion of the connecting member, at which a pipe is connected to the pipe connecting portion, being inserted in the inserted-into portion of the object of connection. In the connected state of the object of connection and the connecting member, the space between the inserted inlet portion and the inserted-into inlet portion is sealed by the annular sealing member. Therefore, due to the valve mechanism of the connecting member being operated, and the internal flow path of the object of connection and the internal flow path of the tubular body being made to communicate with one another, the interior of the pipe that is connected to the object of connection and the interior of the pipe that is connected to the connecting member communicate via the internal flow path of the object of connection and the internal flow path of the tubular body.

Here, in the connecting member, due to the internal peripheral portion of the annular sealing member contacting the outer peripheral surface of the inserted inlet portion, and the outer peripheral portion of the sealing member contacting the inner peripheral surface of the inserted-into inlet portion of the object of connection, the space between the inserted inlet portion and the inserted-into inlet portion is sealed. Therefore, even if the object of connection and the connecting member that are in the connected state are rotated relatively around the axes thereof, the sealing effect by the sealing member can be maintained.

In this way, in the above-described connecting member, due to the object of connection and the connecting member that are in the connected state being rotated relatively around the axes thereof, excessive force in the twisting direction, which is applied to at least one of the respective pipes, can be mitigated, and even if the object of connection and the connecting member are rotated relatively around the axes thereof, the sealing effect due to the sealing member can be maintained. Therefore, for example, as compared with a structure in which a mechanism that can rotate relatively is built into the connecting member, the structure of the connecting member can be made to be simple.

Moreover, the connecting member uses a structure (an axial sealing structure) in which the inner peripheral portion of the annular sealing member contacts the outer peripheral surface of the inserted inlet portion, and the outer peripheral portion of the sealing member contacts the inner peripheral surface of the inserted-into inlet portion. Therefore, the contact pressure of the sealing member and the inserted-into inlet portion is near uniform in the peripheral direction of the sealing member, and the contact pressure of the sealing member and the inserted inlet portion is near uniform in the peripheral direction of the sealing member. Therefore, in the above-described connecting member, the sealing performance is improved as compared with a structure (a planar sealing structure) in which sealing surfaces of connecting members are pushed against one another.

In this way, in accordance with the connecting structure of Note 10, the performance of sealing the space between the object of connection and the connecting member can be improved while the structure of the connecting member is made simple.

Note that the disclosure of Japanese Patent Application No. 2023-195977 filed on November 17, 2023 is, in its entirety, incorporated by reference into the present specification.

All publications, patent applications and technical standards mentioned in the present specification are incorporated by reference into the present specification to the same extent as if each publication, patent application or technical standard were specifically and individually indicated to be incorporated by reference.

## Claims

1. A pipe connecting structure, comprising:
a first connecting member that includes a first tubular body, an inserted-into inlet portion that is provided at one end of the first tubular body, a first pipe connecting portion provided at another end of the first tubular body and to which a first pipe is connected, and a first valve mechanism able to open and close an internal flow path of the first tubular body;
a second connecting member that includes a second tubular body, an inserted inlet portion that is provided at one end of the second tubular body and that is inserted in the inserted-into inlet portion, a second pipe connecting portion provided at another end of the second tubular body and to which a second pipe is connected, and a second valve mechanism able to open and close an internal flow path of the second tubular body;
a sealing member that is annular, that is disposed between the inserted inlet portion and the inserted-into inlet portion, and that seals a space between the inserted inlet portion and the inserted-into inlet portion due to an inner peripheral portion of the sealing member contacting an outer peripheral surface of the inserted inlet portion and an outer peripheral portion of the sealing member contacting an inner peripheral surface of the inserted-into inlet portion; and
a locking mechanism that maintains an inserted state, in which the inserted inlet portion is inserted in the inserted-into inlet portion, and that allows relative rotation of the first connecting member and the second connecting member around axes thereof.

2. The pipe connecting structure of Claim 1, wherein the sealing member is fit on an outer periphery of the inserted inlet portion.

3. The pipe connecting structure of Claim 2, wherein: an accommodation groove that is annular and is continuous in a peripheral direction is provided in the outer peripheral surface of the inserted inlet portion, and
the sealing member is accommodated in the accommodation groove.

4. The pipe connecting structure of any one of Claim 1 through Claim 3, wherein the locking mechanism includes:
a latch portion that is provided continuously in a peripheral direction at the outer peripheral surface of the inserted inlet portion at further toward a second pipe connecting portion side than a placement region of the sealing member;
a pair of slits extending in the peripheral direction and provided in a peripheral wall of the inserted-into inlet portion so as to face one another, at further toward a first pipe connecting portion side than the placement region of the sealing member; and
a locking member that has a pair of pin portions inserted into the pair of slits respectively and that is fit on an outer periphery of the inserted-into inlet portion so as to be movable between a first position and a second position that is further toward a radial direction inner side than the first position, and, at the first position, the pair of pin portions do not latch on the latch portion, and, at the second position, an interval between the pair of pin portions is more narrow than at the first position, and the pair of pin portions respectively latch on the latch portion, and the locking member maintains the inserted state.

5. The pipe connecting structure of Claim 4, wherein:
a locking groove that is annular and is continuous in the peripheral direction is provided in the outer peripheral surface of the inserted inlet portion at further toward the second pipe connecting portion side than the placement region of the sealing member,
the latch portion is structured by a groove wall, which is at a side opposite the second pipe connecting portion side, of the locking groove, and
when the locking member is positioned at the second position, the pair of pin portions are respectively within the locking groove.

6. The pipe connecting structure of Claim 5, wherein the locking member includes a connecting portion that connects one end portions of the pair of pin portions together, and, in a state in which the locking member is positioned at the second position, a gap is formed between the connecting portion and an outer peripheral surface of the inserted-into inlet portion.

7. The pipe connecting structure of Claim 6, wherein:
other end portions of the pair of pin portions respectively are bent, and
concave portions, which accommodate bent portions of the pair of pin portions at the first position, are respectively provided in the outer peripheral surface of the inserted-into inlet portion, midway along the pair of slits.

8. The pipe connecting structure of any one of Claim 4 through Claim 7, wherein:
the first valve mechanism includes a valve body that opens and closes the internal flow path of the first tubular body, and an operation portion that is provided at an outer periphery of the first tubular body and operates an opening/closing operation of the valve body, and
in a state in which the locking member is positioned at the second position and the valve body opens the internal flow path of the first tubular body due to operation of the operation portion, movement of the locking member to the first position is impeded due to a portion of the operation portion abutting the locking member.

9. The pipe connecting structure of any one of Claim 1 through Claim 7, wherein:
the first valve mechanism includes a first valve body that opens and closes the internal flow path of the first tubular body, and a first operation portion that is provided at an outer periphery of the first tubular body and that operates an opening/closing operation of the first valve body,
the second valve mechanism includes a second valve body that opens and closes the internal flow path of the second tubular body, and a second operation portion that is provided at an outer periphery of the second tubular body and that operates an opening/closing operation of the second valve body, and
in a case in which, in the inserted state, at least one of the first valve body or the second valve body is in an open state, the locking mechanism impedes pulling-out of the inserted inlet portion from the inserted-into inlet portion.

10. A connecting member, comprising:
a tubular body;
an inserted inlet portion that is provided at one end of the tubular body and that is inserted into an inserted-into inlet portion of an object of connection;
a sealing member that is annular and is fit on an outer periphery of the inserted inlet portion, and that seals a space between the inserted inlet portion and the inserted-into inlet portion due to, in an inserted state in which the inserted inlet portion is inserted into the inserted-into inlet portion, an inner peripheral portion of the sealing member contacting an outer peripheral surface of the inserted inlet portion and an outer peripheral portion of the sealing member contacting an inner peripheral surface of the inserted-into inlet portion;
a pipe connecting portion provided at another end of the tubular body and to which a pipe is connected; and
a valve mechanism able to open and close an internal flow path of the tubular body.
